# EUROPEAN PATENT APPLICATION

(11) **EP 2 149 360 A1**
(43) Date of publication of application: **03.02.2010**
(21) Application number: 08764860.6
(22) Date of filing: 29.05.2008
(51) Int. Cl.: A61K 6/00, A61C 7/00, A61K 6/083

(54) **ADHESIVE FOR TEETH-STRAIGHTENING MEMBERS**

(30) Priority: 31.05.2007 JP 2007146191
(71) Applicant: Nihon University, Tokyo 102-8275 (JP); Tokuyama Dental Corporation, Tokyo 110-0016 (JP)
(72) Inventor: NAMURA, Yasuhiro, Tokyo 102-8275 (JP); SHIMIZU, Noriyoshi, Tokyo 102-8275 (JP); AMMA, Shizuka, Tsukuba-shi Ibaraki 300-4247 (JP); SUZUKI, Takeshi, Tsukuba-shi Ibaraki 300-4247 (JP); KAZAMA, Hideki, Tsukuba-shi Ibaraki 300-4247 (JP)
(74) Representative: Gulde Hengelhaupt Ziebig & Schneider
(86) International application number: PCT/JP2008/059891
(87) International publication number: WO 2008/146875

(57) **Abstract**

The present invention discloses an adhesive for orthodontic attachments, which contains (A) a polymerizable monomer, (B) a polymerization initiator and (C) a fluorescent dye and, when cured, exhibits a fluorescence spectrum having a peak at 400 to 800 nm. As the polymerization initiator (B), there is preferably used a compound which generates a radical through the transfer of hydrogen between two components, or a compound which generates a radical species through intramolecular cleavage. As the fluorescent dye (C), a coumarin type dye is used preferably.

## Description

### Technical Field

The present invention relates to an adhesive for orthodontic attachments, which is used mainly for fixing a orthodontic attachments on teeth surfaces in the orthodontic treatment and which can maintain fluorescence over a long period even after the curing.

### Background Art

In ordinary orthodontic treatment, a orthodontic attachment (e.g. a bracket) is bonded onto teeth surfaces with a orthodontic adhesive and then a wire (which is called an arch wire) is fixed to the attachments. When a certain period of time has passed and the teeth have been straightened, the attachment-removing operation (which is called debonding) is conducted to remove the wire and the orthodontic attachments. After the debonding, the adhesive remaining on the teeth surfaces is removed with a specially designed device, whereby the treatment is complete. The removal of the adhesive conducted after the debonding is necessary in order to recover the beauty of teeth and avoid dental caries. In bonding the orthodontic attachment onto the teeth surfaces with the adhesive, it is not rare that the adhesive is applied onto wrong places. In that case, it is necessary to quickly remove the cured adhesive from the teeth surfaces and apply again the adhesive onto right places. Further, when, after the bonding of the orthodontic attachment onto the teeth surfaces, when the cured excess adhesive is present around the orthodontic attachment, the cured excess adhesive need be removed.

In the operation of removing the cured adhesive from the teeth surfaces, conducted in the orthodontic treatment, the operator receives severe stress for the following reason. Many of the adhesives currently in use have a color close to the color of dental crown, therefore, the adhesive remaining on teeth surfaces is difficult to distinguish under the irradiation of a dental light and it is hard to remove the remaining adhesive efficiently.

In such a situation, there is required an adhesive for orthodontic attachment, which, when cured and removed from teeth surfaces, is easy to detect the place of the presence of cured adhesive.

As to the prior art regarding the coloring of adhesive, there is an adhesive containing a light-fading dye (see Patent Literature 1). This adhesive is intended to make easy the removal of the uncured excess adhesive which appears in fixing orthodontic attachments onto teeth surfaces with an adhesive.

The excess adhesive is ordinarily removed before it is cured completely. However, in the removal, it is advantageous for detection of applied adhesive which has a color different from the color of dental crown. Meanwhile, an adhesive having a color which makes easy its distinction from dental crown, makes the adhesive conspicuous during the period of orthodontic treatment, impairing the aesthetics of teeth. The adhesive described in the Patent Literature 1 contains a light-fading dye. Before the curing, the adhesive shows, owing to the dye, a color different from the color of dental crown but, after the curing, the dye fades quickly and the adhesive shows a color close to the color of dental crown. In the bonding, the dye fades with the curing of the adhesive; therefore, after the curing, it is difficult to distinguish the cured adhesive remaining on teeth surfaces, from dental crown.

Meanwhile, adhesives containing a dye which gives a color upon cooling, is commercially available. The cured material of such an adhesive has a color similar to the color of teeth, at temperatures close to human's body temperature. The cured material shows a color different from the color of teeth when cooled by air or water. In this adhesive, the cured material remaining on teeth surfaces is cooled so as to show a color, whereby the cured material is distinguished easily. However, the color development by cooling takes time and, moreover, the cooling by cold water or the like stimulates the nerve of dentin, causing pain. Further, the temperature of teeth surface is easily lowered, by ordinary drinking or eating, down to the color-developing temperature of the dye; thus, a color develops even at a non-debonding time, which may impair the aesthetics of teeth.

Meanwhile, there is orthodontic appliance (e.g. a bracket or an arch wire) which emits a fluorescence or a phosphorescence when irradiated with a light (see Patent Literature 2). This orthodontic appliance emits a light in darkness and is intended to enjoy light emission. As the light source, only inorganic pigments are disclosed. The use amount of the inorganic pigment is very large at 10 to 15 mass % relative to the mass of the appliance. The prior art described in the Patent Literature 2 is different, in the basic idea, from the later described present invention in that the orthodontic appliance per se emits a light.

Thus, there is not yet provided an adhesive which is difficult to distinguish from dental crown during the use of orthodontic attachment and whose remaining portion is detected instantly in debonding or the like and is removed easily.
Patent Literature 1: National Publication of International Patent Application No. 2004-510796 (Claims)
Patent Literature 2: US 5692895

### Disclosure of the Invention

### Technical Problem

The task to be achieved by the invention is to provide an adhesive composition for dental treatment which is colorless and transparent or has a color close to dental crown when a orthodontic attachment has been mounted and, in debonding or the like, is easily distinguishable from dental crown.

### Technical Solution

The present inventors made a study in order to achieve the above technical task. As a result, it was found that a particular composition comprising a polymerizable monomer, a fluorescent dye and a polymerization initiator, when used as an adhesive for orthodontic attachment, is difficult to distinguish from dental crown in ordinary use condition and, when irradiated with a light, emits a fluorescence and can be easily distinguished from dental crown. The finding has led to the completion of the present invention.

Hence, the present invention relates to an adhesive for orthodontic attachment, comprising
(A) a polymerizable monomer,
(B) an effective amount of a photo-polymerization initiator, and
(C) an effective amount of a fluorescent dye.

The present invention relates further to an adhesive for orthodontic attachment, comprising
(A) a polymerizable monomer,
(B) an effective amount of a polymerization initiator, and
(D) an organic filler containing at least (E) a polymer of a polymerizable monomer and (C) an effective amount of a fluorescent dye, or an organic composite filler containing at least (E) a polymer of a polymerizable monomer, (C) an effective amount of a fluorescent dye and an inorganic filler.

### Advantageous Effects

The adhesive for orthodontic attachments, of the present invention can be preferably used for adhesion of living body hard tissue (e.g. teeth) and metal or inorganic material (e.g. orthodontic attachment). The adhesive of the present invention contains a fluorescent dye and does not lose its fluorescence at least right after the curing of the adhesive. Therefore, in the treatment for orthodontics, even if the present adhesive is applied on wrong places of teeth surfaces in the bonding of orthodontic attachment on teeth surfaces, the adhesive applied on the wrong places can be easily detected and can be easily removed because the applied adhesive emits a fluorescence when irradiated with a dental curing light unit. Also, even when the excess portion of adhesive is present around the bonded orthodontic attachment, it can be removed easily. Further, since the emission of fluorescence is maintained over a long period, the adhesive remaining on the teeth surfaces from which the orthodontic attachment has been removed, can be removed efficiently in the debonding stage of orthodontic treatment and the stress received by the operator can be reduced greatly.

In the adhesive of the present invention, use of dye, etc. other than the fluorescent dye is optional; therefore, the aesthetics of teeth during use of orthodontic attachment and the distinguishability of adhesive from dental crown can be both satisfied.

### Best Mode for Carrying Out the Invention

The adhesive for orthodontic attachments, of the present invention is **characterized in that** the adhesive after curing emits a fluorescence when irradiated with a light using a dental curing light unit in the debonding stage of orthodontic treatment, which makes easy the distinguishment of residual adhesive. In order to achieve it, the adhesive of the present invention comprises (A) a polymerizable monomer, (B) a polymerization initiator and (C) a fluorescent dye, whereby the distinguishment of residual adhesive is easy in the debonding stage of orthodontic treatment.

In order to obtain the adhesive which emits a fluorescence even after the curing, intended by the present invention, it is necessary that the polymerization initiator and the fluorescent dye which hardly react in the curing of the adhesive or, even if the reaction has occurred, the adhesive still maintains fluorescence as a whole. In order to easily distinguish the residual portion of the adhesive, it is necessary that the fluorescence intensity of the cured material of the adhesive, measured right after the curing, is higher, when irradiated with a light of 480 nm, than the fluorescence intensity of the photo-cured material for reference, of the following curing composition for reference, measured right after the curing.

### Curing composition for reference

Comprises at least the following components (a) to (e)
(a) 2,2'-bis(4-(2-hydroxy-3-methacryloxypropoxy)phenyl)propane,
(b) triethylene glycol dimethacrylate,
(c) camphorquinone,
(d) ethyl dimethylaminobenzoate, and
(e) Eosine Y
wherein the component (e) is contained in an amount of 0.001 part by mass relative to 100 parts by mass of the components (a) to (d) consisting of 59.9 mass % of (a), 39.9 mass % of (b), 0.1 mass % of (c) and 0.1 mass % of (d).

The comparison of the fluorescence intensity of the cured material of the present adhesive with the fluorescence intensity of the cured material for reference is conducted by the following method. First, the present adhesive and the curing composition for reference comprising the above-mentioned components (a) to (e) are each made into a plate-shaped cured material having a thickness of 1.0 ± 0.1 mm, using a mold. Then, right after curing, the cured material of the present adhesive and the cured material for reference are measured for fluorescence intensity. "Right after curing is defined as "within 1 hour after the complete curing of the present adhesive or the curing composition for reference". The measurement of fluorescence intensity is carried out using a fluorescence spectrophotometer. A exciting light of 480 nm wavelength is applied to the cured material in its thickness direction, and the fluorescence spectrum of 400 to 800 nm emitted from the cured material is measured.

In general, light irradiator usable in the oral cavity is a dental curing light unit which is used in the photo-polymerization of composite resin or the like, and a visible light irradiator is in use from the standpoint of safety. The wavelength of the light emitted therefrom is generally controlled at around 480 nm which is the maximum absorption wavelength region of camphorquinone used widely as a photo-polymerization initiator for composite resin. Therefore, in the case of the adhesive of the present invention as well, the cured material present on teeth surfaces is confirmed by applying a light having a wavelength of around 480 nm. The irradiation with a light of the above-mentioned wavelength can be carried out using a dental curing light unit, as mentioned above, and therefore is very simple and efficient in the dental treatment. For this reason, a light having the above wavelength of 480 nm is employed as an exciting light in the measurement of the fluorescence intensity of the cured material of the present adhesive right after the curing. The fluorescence spectrum of the cured material of the present adhesive, emitted by application of the exciting light is compared with the fluorescence spectrum of the cured material for reference, to evaluate the fluorescence intensity of the cured material of the present adhesive.

The maximum excitation wavelength of the fluorescent dye to be contained in the cured material differs depending upon the kind of the fluorescent dye used. As long as the fluorescent dye contained in the cured material has an absorption at least at 480 nm and, when irradiated with a light of 480 nm, exhibits a peak of fluorescence spectrum at a visible light region of 400 to 800 nm, the fluorescent dye can be used as the component (C) of the adhesive of the present invention. Incidentally, the Eosine Y (e) used in the curing composition for reference as a fluorescent dye has the maximum absorption wavelength at 525 nm and shows sufficient absorption also at 480 nm. This fluorescent dye, when irradiated with a light of 480 nm, exhibits a peak of fluorescence spectrum at a 500 to 560 nm region.

The comparison of the fluorescence intensity of the cured material of an adhesive with the fluorescence intensity of the cured material for reference is conducted according to the following procedure. First, for the cured material of the adhesive, which has exhibited peaks of fluorescence spectrum at a visible light region of 400 to 800, the height of the highest peak of the obtained spectrum is read as maximum fluorescence intensity. Also for the cured material for reference, the maximum fluorescence intensity is read in the same manner. Then, these two maximum fluorescence intensities are compared. When the value of the maximum fluorescence intensity measured for the cured material of the adhesive is higher than the maximum fluorescence intensity of the cured material for reference, the composition used for formation of the cured material of the adhesive is an adhesive for orthodontics with the fluorescence intensity of the present invention. Incidentally, as to the peaks of fluorescence spectrum, it is sufficient that part of the peaks is included the above-mentioned visible light region of 400 to 800 nm, and the maximum peak (peak top) of the peaks need not be present in the region.

The cured material for reference, even when the amount is very small, for example, such an amount that is actually applied on teeth surfaces for bonding of orthodontic attachment, emits a fluorescence that can be sufficiently detected visually, when irradiated with a light having a wavelength of around 480 nm (preferably a region of 420 to 520 nm). Therefore, the cured material for reference can be sufficiently distinguished from dental crown when irradiated with a dental curing light unit having a wavelength region of 420 to 520 nm, such as LED light unit, halogen light unit or the like. Accordingly, a cured material of adhesive which shows, in the fluorescence spectrum of 400 to 800 nm, the maximum fluorescence intensity higher than that of the cured material for reference, can be easily distinguished from dental crown when present thereon.

The maximum fluorescence intensity of the cured material of an adhesive for orthodontic attachments is preferably 110% or more in terms of the relative value to the maximum fluorescence intensity of the cured material of the curing composition for reference (the relative value is hereinafter referred to as "relative fluorescence intensity"). When the relative fluorescence intensity is 110% or more, the fluorescence of the cured material of the adhesive is easily recognized on dental crown. The relative fluorescence intensity is more preferably 300% or more. Meanwhile, the relative fluorescence intensity is preferably 700% or less from the standpoint of coloring. Further, the relative fluorescence intensity is preferred to be in the above range, even after 3,000 times repeats of a cycle of immersing the cured material of the adhesive for orthodontic attachments in a 4 °C water tank for 1 minute, then transferring into a 60 °C water tank and immersing therein for 1 minute, and returning into the 4 °C water tank. Such a cured material of the adhesive is considered to maintain a fluorescence intensity which allows for distinguishment of the cured material from dental crown, even after long-term use in orthodontic treatment. Therefore, such a cured material of the adhesive is advantageous in its removal from teeth surfaces.

In obtaining the adhesive for orthodontics, of the present invention, it is fundamentally formulated so that its cured material shows a fluorescence intensity satisfying the above-mentioned requirements. Hence, it is necessary that the fluorescent dye, which has an absorption at least at 480 nm (mentioned above) and, when irradiated with a light of this 480 nm, exhibits a peak of fluorescence spectrum in a visible light region of 400 to 800 nm is used. However, even when a fluorescent dye satisfying the above requirement is used, the fluorescence intensity of cured material may be decreased depending upon the combination of the fluorescent dye with the polymerization initiator used. Therefore, the fluorescent dye need be selected in sufficient consideration of its combination with the polymerization initiator. Particularly when a photo-polymerization initiator is used as the polymerization initiator, there are many cases that the fluorescent dye is deactivated and the color (fluorescence) of adhesive is impaired strikingly, depending upon the combination of the polymerization initiator and the fluorescent dye. The mechanism in which the fluorescent dye is deactivated by the photo-polymerization initiator, is as follows.

The fluorescent dye functions as a sensitizer and, when irradiated with a light, is photo-excited and becomes a sensitizer (fluorescent agent); the photo-polymerization initiator receives electron from the sensitizer (or gives electron to the sensitizer); this two-molecules reaction generates an intermediate. Polymerization starts from the intermediate or from the active species formed by the secondary reaction of the intermediate; meanwhile, the fluorescent dye per se loses electron (or receives electron), is decomposed, and loses the fluorescence. Particularly when a strong electron acceptor is used as an initiator, the fluorescent dye loses its fluorescence almost completely.

As described above, there are cases in which fluorescence is lost in the initiator mechanism. Therefore, in order to obtain an adhesive intended by the present invention, the following four systems I) to IV) can be shown as preferable systems.
I) A system, which uses the fluorescent dye (C) not losing fluorescence (hardly decomposed) in the electron transfer by photo-excitation.
II) A system, which uses the polymerization initiator (B) with low ability of electron acceptor (or donor).
III) A system, which uses polymerization initiator (B) requiring no sensitizer in radical generation.
IV) A system, which uses (A) polymerizable monomer, (B) a polymerization initiator and (D) an organic filler containing at least (E) a polymer of a polymerizable monomer and (C) a fluorescent dye.
In the system IV) of the above four systems I) to IV), the fluorescent dye is in the organic filler in a dispersed state; therefore, the reaction of fluorescence deactivation does not take place between the polymerization initiator (B) and the fluorescent dye (C). Therefore, the combination of the polymerization initiator (B) and the fluorescent dye (C) may be any combination as long as the adhesive cured material obtained finally has the above-mentioned fluorescence intensity.

The systems I) to III) and the system IV) are different largely from each other, for example, in the combination of the fluorescent dye and the polymerization initiator, which are used. Hence, description is made on each system by largely dividing into two patterns of the systems I) to III) and the system IV).

### <First pattern>

The first pattern of the present invention is an adhesive composition wherein a fluorescent dye is added directly, to a polymerizable monomer (A) and a polymerization initiator (B) without being contained in an organic filler. Specifically, it is a composition of the following system I), II) or III).

### I) A system, which uses the fluorescent dye (C) not losing the fluorescence (hardly decomposed) through the transfer of electron caused by photo-excitation

In the system I), there can be mentioned, as the fluorescent dye (C), for example, condensed polycyclic compounds such as perylene type dye, anthraquinone type dye, thioindigo type dye, quinophthalone type dye and the like. The condensed polycyclic compound is hardly decomposed through a reaction associated with electron transfer. Therefore, the compound hardly loses fluorescence through the electron transfer from or to polymerization initiator and accordingly maintains strong fluorescence even after the curing of adhesive.

Since the condensed polycyclic compound used as the component (C) hardly loses fluorescence, there can be used, as the photo-polymerization initiator combined therewith, a known composition ordinarily used in adhesives for dental treatment.

### II) A system, which uses the polymerization initiator (B) with low ability of electron acceptor (or donor)

In the system II), the initiator (which is an electron acceptor) is low in ability of electron acceptance (or of giving electron to sensitizer); therefore, the fluorescent dye (C) hardly loses or accepts electron and is hardly decomposed. Specifically, there can be mentioned a system in which the component (B) is a polymerization initiator capable of generating a radical through the hydrogen transfer between two components and which contains essentially no electron acceptor having a saturated calomel electrode-reduced potential of -0.6 V or higher, preferably -1.0 V or higher. As such a component (B), there can be mentioned, for example, a combination of an α-diketone (e.g. camphorquinone) and an amine. In such a polymerization initiation mechanism, the α-diketone excited by photo-irradiation abstracts hydrogen from the amine, whereby a radical species is generated. The photo-excited α-diketone functions also as an electron acceptor but is low in the function and, when a hydrogen donor such as amine is present, hydrogen abstraction takes place in precedence to electron abstraction. As a result, the fluorescence of fluorescent dye is maintained.

As the compound which generates a radical species by hydrogen abstraction reaction, there can be mentioned, for example, α-diketones such as camphorquinone, benzil, α-naphthil, acetonaphthene, naphthoquinone, 1,4-phenanthrenequinone, 3,4-phenanthrenequinone, 9,10- phenanthrenequinone and the like; thioxanthones such as 2,4-diethylthioxanthone and the like; and α-aminoacetophenones such as 2-benzyl-dimethylamino-1-(4-morpholinophenyl)-butanone-1, 2-benzyl-diethylamino-1-(4-morpholinophenyl)-butanone-1, 2-benzyl-dimethylamino-1-(4-morpholinophenyl)-propanone-1, 2-benzyl-diethylamino-1-(4-morpholinophenyl)-propanone-1, 2-benzyl-dimethylamino-1-(4-morpholinophenyl)-pentanone-1, 2-benzyl-diethylamino-1-(4-morpholinophenyl)-pentanone and the like. Of these, more preferred are α-diketones such as camphorquinone, benzil, α-naphthil, acetonaphthene, naphthoquinone, 1,4-phenanthrenequinone, 3,4-phenathrenequinone, 9,10-phenathrenequinone and the like; and most preferred is camphorquinone from the standpoint of activity.

As the polymerization accelerator which functions as a hydrogen donor when combined with the above-mentioned hydrogen abstraction type polymerization initiator, there can be mentioned tertiary amines such as N,N-dimethylaniline, N,N-diethylaniline, N,N-di-n-butylaniline, N,N-dibenzylaniline, N,N-dimethyl-p-toluidine, N,N-diethyl-p-toluidine, N,N-dimethyl-m-toluidine, p-bromo-N,N-dimethylaniline, m-chloro-N,N-dimethylaniline, p-dimethylaminobenzaldehyde, p-dimethylaminoacetophenone, p-dimethylaminobenzoic acid, ethyl p-dimethylaminobenzoate, amyl p-dimethylaminobenzoate, methyl N,N-dimethylanthranilate, N,N-dihydroxyethylaniline, N,N-dihydroxyethyl-p-toluidine, p-dimethylaminophenethyl alcohol, p-dimethylaminostilbene, N,N-dimethyl-3,5-xylydine, 4-dimethylaminopyridine, N,N-dimethyl-α-naphthylamine, N,N-dimethyl-β-naphthylamine, tributylamine, tripropylamine, triethylamine, N-methyldiethanolamine, N-ethyldiethanolamine, N,N-dimethylhexylamine, N,N-dimethyldodecylamine, N,N-dimethylstearylamine, N,N-dimethylaminoethyl acrylate, N,N-dimethylaminoethyl methacrylate, 2,2'-(n-butylimino)diethanol and the like; barbituric acids such as 5-butylbarbituric acid, 1-benzyl-5-phenylbarbituric acid and the like; and mercapto compounds such as dodecylmercaptan, pentaerythritol tetrakis(thioglycolate) and the like. Besides the above compounds, known polymerization accelerators functioning as a hydrogen donor can be used with no restriction. Of these, tertiary amines are preferred particularly.

In the system II), there can be used, besides the above-mentioned polymerization initiators and polymerization accelerators, other polymerization-accelerating compounds (e.g. a borate compounds) described in JP2005-89729A with no restriction as long as they cause no fluorescence deactivation of the component (C) after curing.

In the system II), it is generally preferred to use, as the component (B), a strong electron acceptor such as represented by photo-acid-generating agent, from the standpoint of enhanced polymerization activity. Meanwhile, however, there is a high fear that, as mentioned previously, the too strong function of the electron acceptor impairs the fluorescence intensity of fluorescent dye strikingly. Therefore, in order to obtain the adhesive of the present invention, it is preferred that a strong electron acceptor such as represented by a photo-acid-generating agent is not used essentially or, even if used, it is preferred to use an electron acceptor having a saturated calomel electrode-reduced potential of lower than -0.6 V.

As the electron acceptor having a reduced potential of lower than -0.6 V, there can be mentioned a trihalomethyl group-substituted s-triazine compound represented by the general formula (3), described later in detail as a preferred photo-acid-generating agent in the explanation of the polymerization initiator (B) in the second pattern IV) of the present invention.

In the system II), hydrogen abstraction takes place in precedence to the transfer of electron when a radical species is generated from the component (B); therefore, the transfer of electron is required hardly. Consequently, most of known fluorescent dyes can be used as the component (C) with no restriction. There can be mentioned, for example, acid dyes such as Phloxine B, Eosine Y and the like; condensed polycyclic compounds such as coumarin type dye, perylene type dye, anthraquinone type dye, thioindigo type dye, quinophthalone type dye and the like; and C. I. Pigment Red 4, C. I. Pigment Red 49, C. I. Pigment Orange 5, C. I. Solvent Red 73, C. I. Acid Yellow 73, C. I. Acid Yellow 3, C. I. Solvent Green 7, C. I. Solvent Orange 2, C. I. Acid Yellow 40, capsanthin, C. I. Natural Red 25, C. I. Direct Orange 26, and C. I. Direct Red 23.

Besides, dyes showing fluorescence, which is described in JP2003-277424A can be used with no restriction.

### III) A system, which uses the polymerization initiator (B) requiring no sensitizer in generation of radical species

In the system III), there can be used the polymerization initiator capable of generating a radical species through intramolecular cleavage. As such a polymerization initiator, there can be mentioned, for example, acylphosphine oxide derivatives such as 2,4,6-trimethylbenzoyldiphenylphosphine oxide, bis(2,6-dimethoxybenzoyl)-2,4,4-trimethylpentylphosphine oxide, bis(2,4,6-trimethylbenzoyl)phenylphosphine oxide and the like. These polymerization initiators, when photo-excited, causes cleavage by itself to generate a radical and this radical reacts with the polymerizable monomer, whereby the polymerization of the monomer is initiated. Therefore, even if the fluorescent dye is present in the adhesive composition, the fluorescent dye does not take part in the polymerization initiation mechanism of the polymerization initiator. Accordingly, the fluorescent dye is not consumed and there is no reduction in the fluorescence intensity of the adhesive after the curing.

As the polymerization initiator of the system III), there can be used, besides the above-mentioned polymerization initiators requiring no sensitizer, those which cause no deactivation of fluorescent dye, of the above-mentioned tertiary amines and the polymerization-accelerating compounds (e.g. borate compounds) described in JP2005-89729A, with no restriction.

In the system III) as well, the fluorescent dye does not take place in the polymerization initiation mechanism of polymerization initiator, as described above; therefore, most of known fluorescent dyes can be used with no restriction.

In the systems I) to III), the system II) or the system III) is preferably employed because the fluorescent dye can be selected from a wide range. As described later, in the adhesive for orthodontic attachments, of the present invention, it is advantageous that an acidic component (e.g. acidic group-containing polymerizable monomer) is used as at least part of the polymerizable monomer (A), for enhanced bond strength to teeth. However, many of fluorescent dyes lose fluorescence under such an acidic condition. Hence, when there is used, as the component (A), an acidic group-containing polymerizable monomer, it is preferred to use a fluorescent dye having as-high-as-possible acid resistance.

Preferred as the fluorescent dye having acid resistance is a coumarin type dye usable in the systems II) and III). That is, when the coumarin type dye is used, even when the above-mentioned acidic component is used in the adhesive to bond orthodontic attachment to teeth surfaces. And after a long period, then, the orthodontic attachment is removed from the teeth surfaces, and the residual adhesive is removed, the residual adhesive maintains strong fluorescence and accordingly is easily distinguishable.

The coumarin type dye used in the present invention is a compound represented by the following chemical formula (1):

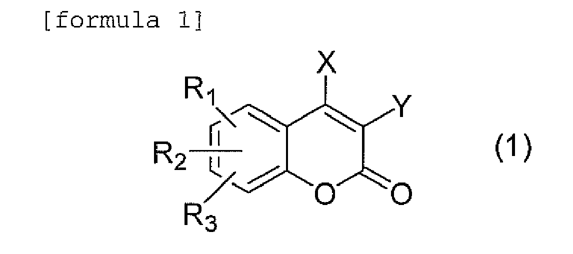

{in the formula, R¹, R² and R³ may be the same or different and are each independently a hydrogen atom, a halogen atom, an alkoxy group, a substituted or unsubstituted alkylamino group, or a substituted or unsubstituted alkenylamino group; any two of R¹, R² and R³ may be bonded to each other to form a condensed ring; X is a hydrogen atom or a cyano group; and Y is a heterocyclic ring group or the following group (2):

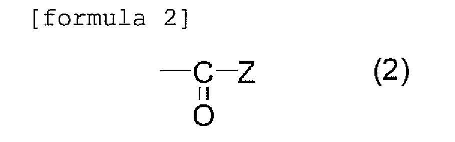

(Z is an alkyl group having 1 to 4 carbon atoms, an aryl group, an alkenyl group or a 3'-curmarino group)}.

As specific examples of the coumarin dye, there can be mentioned 3-thienoylcoumarin, 3-(4-methoxybenzoyl)coumarin, 3-benzoylcoumarin, 3-(4-cyanobenzoyl)coumarin, 3-thienoyl-7-methoxycoumarin, 7-methoxy-3-(4-methoxybenzoyl)coumarin, 3-benzoyl-7-methoxycoumarin, 3-(4-cyanobenzoyl)-7-methoxycoumarin, 5,7-dimethoxy-3-(4-methoxybenzoyl)coumarin, 3-benzoyl-5,7-dimethoxycoumarin, 3-(4-cyanobenzoyl)-5,7-dimethoxycoumarin, 3-acetyl-7-dimethylaminocoumarin, 7-diethylamino-3-thienoylcoumarin, 7-diethylamino-3-(4-methoxybenzoyl)coumarin, 3-benzoyl-7-diethylaminocoumarin, 7-diethylamino-3-(4-cyanobenzoyl)coumarin, 7-diethylamino-3-(4-dimethylaminobenzoyl)coumarin, 3-cinnamoyl-7-diethylaminocoumarin, 3-(p-diethylaminocinnamoyl)-7-diethylaminocoumarin, 3-acetyl-7-diethylaminocoumarin, 3-carboxy-7-diethylaminocoumarin, 3-(4-carboxybenzoyl)-7-diethylaminocoumarin, 3,3'-carbonylbiscoumarin, 3,3'-carbonylbis(7-diethylamino)coumarin, 2,3,6,7-tetrahydro-1,1,7,7-tetramethyl-10-(benzothiazoyl)-11-oxo-1H,5H,11H,-[1]benzopyrano[6,7,8-ij]quinolizine, 3,3'-carbonylbis(5,7-)dimethoxy-3,3'-biscoumarin, 3-(2'-benzimidazoyl)-7-diethylaminocoumarin, 3-(2'-benzoxazoyl)-7-diethylaminocoumarin, 3-(5'-phenylthiadiazoyl-2')-7-diethylaminocoumarin, 3-(2'-benzthiazoyl)-7-diethylaminocoumarin, and 3,3'-carbonylbis(4-cyano-7-diethylamino)coumarin.

Of these, preferred are, from the standpoint of the emission of strong fluorescence in a small addition amount when irradiated with a light from a dental visible curing light unit and the strong acid resistance, 3-acetyl-7-dimethylaminocoumarin, 7-diethylamino-3-thienoylcoumarin, 3-acetyl-7-diethylaminocoumarin, 3,3'-carbonylbis(7-diethylamino)coumarin, 2,3,6,7-tetrahydro-1,1,7,7-tetramethyl-10-(benzothiazoyl)-11-oxo-1H,5H,11H,-[1]benzopyrano[6,7,8-ij]quinolizine, 3-(2'-benzimidazoyl)-7-diethylaminocoumarin, 3-(2'-benzoxazoyl)-7-diethylaminocoumarin, 3-(5'-phenylthiadiazoyl-2')-7-diethylaminocoumarin, 3-(2'-benzthiazoyl)-7-diethylaminocoumarin, and 3,3'-carbonylbis(4-cyano-7-diethylamino)coumarin. Most preferred is, from the standpoint of, in particular, higher acid resistance, 2,3,6,7-tetrahydro-1,1,7,7-tetramethyl-10-(benzothiazoyl)-11-oxo-1H,5H,11H,-[1]benzopyrano[6,7,8-ij]quinolizine.

In the above, description was made on the systems using a photo-polymerization initiator as the polymerization initiator. However, in each system, a polymerization initiator other than the photo-polymerization initiator may be used. As the initiator other than the photo-polymerization initiator, there can be mentioned a so-called chemical polymerization initiator represented by an organic peroxide and an amine compound. In the adhesive using the chemical polymerization initiator, no light irradiation is required. Therefore, the fluorescent dye (c) is not consumed in the polymerization of the component (A) and there is no reduction in the fluorescence intensity after curing.

Of the polymerization initiators (the components (B)) usable in the adhesive for orthodontic attachments, in the present invention, the polymerization initiator capable of initiating polymerization by a chemical reaction is such as shown below. The chemical polymerization initiator consists of at least two components and all the components are mixed right before the use to generate an active species for polymerization at around room temperature. As such a chemical polymerization initiator, an amine compound/organic peroxide system is representative.

As specific examples of the amine compound, there can be mentioned aromatic amine compounds such as N,N-dimethyl-p-toluidine, N,N-dimethylaniline, N,N-diethanol-p-toluidine and the like.

As the organic peroxide, preferred are organic peroxides which are classified into known ketone peroxide, peroxyketal, hydroperoxide, diaryl peroxide, peroxyester, diacyl peroxide and peroxydicarbonate. Besides, chemical polymerization initiators described in JP2007-8972A can be used with no restriction.

As the polymerization initiator (the component (B)), the photo-polymerization initiator is preferred because it is curable right after the positioning of orthodontic attachment onto teeth surfaces in the bonding and it provides good operability.

As to the use amount of the component (B), there is no particular restriction as long as it is an amount allowing for effective curing of the present adhesive, and the amount can be determined appropriately. The amount is preferably 0.01 to 10 mass % relative to 100 mass % of the total of the component (A) as described later and the component (B), more preferably 0.1 to 5 mass %. With an amount of the component (B), of less than 0.01 mass %, polymerization tends to be insufficient. Meanwhile, with an amount of the component (B), more than 10 mass %, the strength of the cured material obtained tends to be low, which is not preferred.

On the other hand, the use amount of the component (C) differs depending upon the kind of the polymerization initiator used, etc. and cannot be determined in a simple rule. However, the use amount is controlled so that the cured material of the present adhesive exhibits a fluorescence intensity larger than that of the cured material for reference. Ordinarily, the use amount of the fluorescent dye (C) is preferably 0.0001 to 0.5 part by mass, more preferably 0.0005 to 0.1 part by mass relative to 100 parts by mass of the total of the component (A) and the component (B), from the standpoint of fluorescence intensity and coloring. With an amount of the component (C), of less than 0.0001 part by mass, it tends to be difficult to distinguish the residual adhesive in debonding and the effect of the component (C) tends to be low. With an amount of the component (C), of more than 0.5 part by mass, coloring is seen after the curing of the present adhesive, which is not preferred from the aesthetics of teeth.

As the polymerizable monomer which is the component (A), there can be used known compounds with no particular restriction as long as they have at least one polymerizable unsaturated group in the molecule. As the polymerizable unsaturated group present in the molecule of the component (A) monomer, there can be mentioned acryloxy group, methacryloxy group, acrylamide group, methacrylamide group, vinyl group, allyl group, ethynyl group, styryl group, etc. In particular, acryloxy group and methacryloxy group are preferred because they enhance the curability of the present adhesive.

As specific examples of the compound preferably usable as the component (A), there can be mentioned mono(meth)acrylate type monomers such as methyl (meth)acrylate (this means methyl acrylate or methyl methacrylate and the same applies hereinafter), ethyl (meth)acrylate, glycidyl (meth)acrylate, 2-cyanomethyl (meth)acrylate, benzyl (meth)acrylate, polyethylene glycol mono(meth)acrylate, allyl (meth)acrylate, 2-hydroxyethyl (meth)acrylate, glycidyl (meth)acrylate, 3-hydroxypropyl (meth)acrylate, glyceryl mono(meth)acrylate and the like; and polyfunctional (meth)acrylate type monomers such as ethylene glycol di(meth)acrylate, diethylene glycol di(meth)acrylate, triethylene glycol di(meth)acrylate, nonaethylene glycol di(meth)acrylate, propylene glycol di(meth)acrylate, dipropylene glycol di(meth)acrylate, 2,2'-bis[4-(meth)acryloyloxyethoxyphenyl]propane, 2,2'-bis[4-(meth)acryloyloxyethoxyphenyl]propane, 2,2'-bis{4-[3-(meth)acryloyloxy-2-hydroxypropoxy]phenyl}propane, 1,4-butanediol di(meth)acrylate, 1,6-hexanediol di(meth)acrylate, trimethylolpropane tri(meth)acrylate, urethane (meth)acrylate, epoxy (meth)acrylate and the like.

Also, it is possible to mix a polymerizable monomer other than the above-mentioned (meth)acrylate type monomer for polymerization. As examples of the other polymerizable monomer, there can be mentioned fumaric acid ester compounds such as monomethyl fumarate, diethyl fumarate, diphenyl fumarate and the like; styrene and α-methylstyrene derivatives such as styrene, divinylbenzene, α-methylstyrene, α-methylstyrene dimer and the like; and allyl compounds such as diallyl phthalate, diallyl terephthalate, diallyl carbonate, allyl diglycol carbonate and the like. These polymerizable monomers can be used singly or in admixture of two or more kinds.

In the adhesive of the present invention, an acidic component may be contained therein for stronger bonding of the adhesive onto teeth. This embodiment is preferably realized by using, as at least part of the polymerizable monomer (A), an acidic group-containing polymerizable monomer having, in the molecule, at least one acidic group and at least one polymerizable unsaturated group. The use amount of the acidic group-containing polymerizable monomer is preferably at least 5 mass %, more effectively 10 to 50 mass % in the polymerizable monomer (A).

As to the acidic group-containing polymerizable monomer, there is no particular restriction as long as it is a compound having, in the molecule, at least one acidic group and at least one polymerizable unsaturated group. Known such compounds can be used. As the acidic group in the acidic group-containing polymerizable monomer, there can be mentioned (di)hydrogen phosphoric acid ester group, phosphonic acid group, carboxyl group and sulfonic acid group. Incidentally, in the present invention, acid anhydride groups such as phthalic acid anhydride group and the like are included in the acidic group because they are ordinarily hydrolyzed to become an acidic group in the use of the adhesive.

As preferably usable examples of the acidic group-containing polymerizable monomer, there can be mentioned compounds such as vinylphosphonic acids in which phosphoric acid group is bonded directly to the vinyl group, acrylic acid, methacrylic acid and vinylsulfonic acid, other than compounds represented by the following chemical formulas.

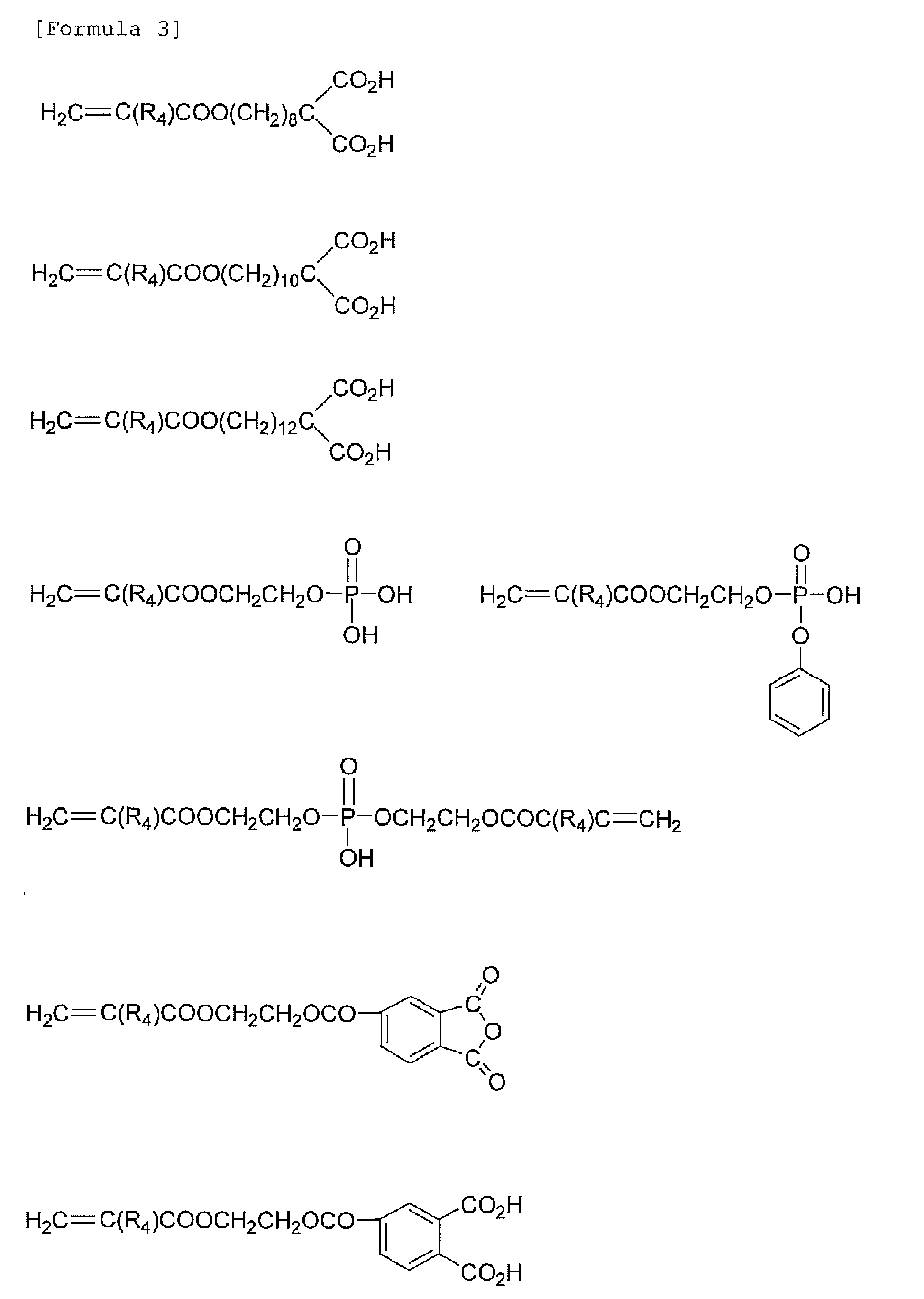

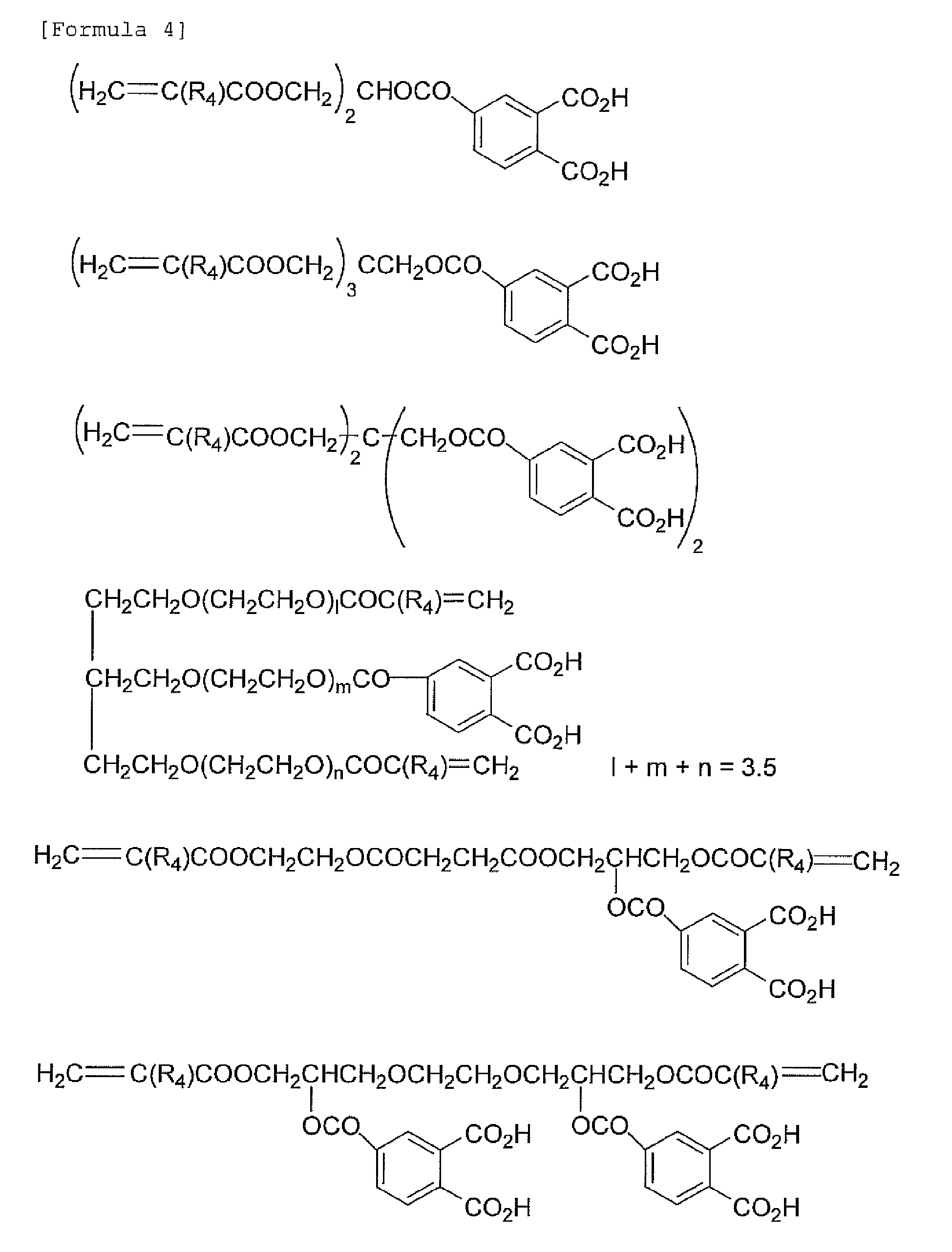

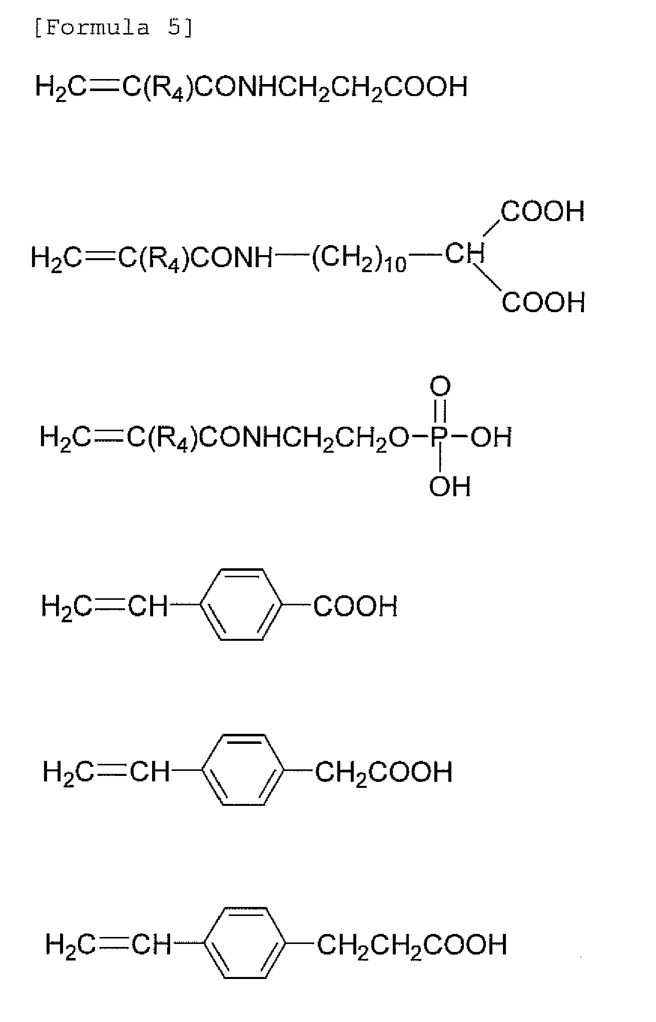

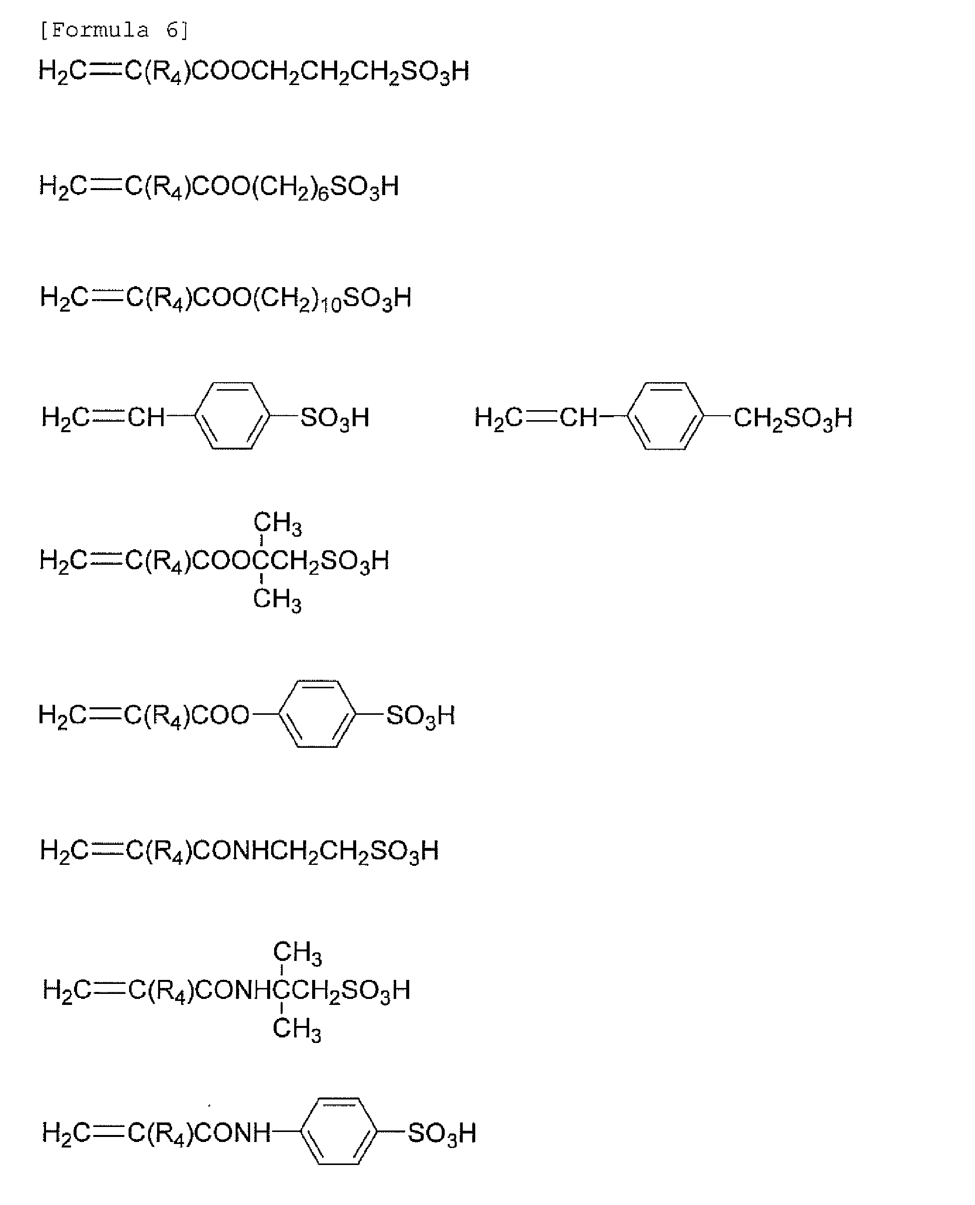

In the above compounds, R₄ is a hydrogen atom or a methyl group. These compounds can be used as the component (A) polymerizable monomer, singly or in admixture of two or more kinds.

In the adhesive of the present invention, the use amount of the component (A) is preferably 99.99 to 90 mass %, more preferably 99.9 to 95 mass % in 100 mass % of the total of the component (A) and the component (B). With an use amount of the component (A), of more than 99.99 mass %, polymerization tends to be insufficient. Meanwhile, with an use amount of the component (A), of less than 90 mass %, the strength of the cured material of adhesive tends to be low, which is not preferred.

In each of the systems I) to III), a filler component may be used as necessary in order to enhance the strength of the cured material of the present adhesive. As the filler component, there can be used, with no restriction, a known filler such as inorganic filler, organic filler, composite filler of inorganic filler and organic filler, or the like.

As the inorganic filler, there can be mentioned, for example, silica; minerals containing silica as the base material, such as kaolin, clay, mica, mica and the like; ceramics and glasses containing silica as the base material and further containing Al₂O₃, B₂O₃, TiO₂, ZrO₂, BaO, La₂O₃, SrO₂, CaO, P₂O₅, etc. As the glasses, preferred are lanthanum glass, barium glass, strontium glass, soda glass, lithium borosilicate glass, zinc glass, fluoroaluminosilicate glass, borosilicate glass and bio glass. Other than these, also preferred are crystalline quartz, hydroxyapatite, alumina, titanium oxide, yttrium oxide, zirconia, calcium phosphate, barium sulfate, aluminum hydroxide, sodium fluoride, potassium fluoride, sodium monofluorophosphate, lithium fluoride and ytterbium fluoride.

As the organic filler, there can be mentioned, for example, polymethyl methacrylate, polyethyl methacrylate, polymer of polyfunctional methacrylate, polyamide, polystyrene, polyvinyl chloride, chloroprene rubber, nitrile rubber and styrene-butadiene rubber.

The inorganic filler, when made hydrophobic with a surface-treating agent represented by a silane coupling agent, can have higher compatibility with the polymerizable monomer and can achieve improved mechanical strength and water resistance. As the method for making the inorganic filler hydrophobic, a known method can be used. As the silane coupling agent, there can be preferably used methyltrimethoxysilane, methyltriethoxysilane, methyltrichlorosilane, dimethyldichlorosilane, trimethylchlorosilane, vinyltrimethoxysilane, vinyltriethoxysilane, vinyltrichlorosilane, vinyltriacetoxysilane, vinyltris(β-methoxyethoxy)silane, γ-methacryloyloxypropyltrimethoxysilane, γ-methacryloyloxypropyltris(β-methoxyethoxy)silane, γ-chloropropyltrimethoxysilane, γ-chloropropylmethyldimethoxysilane, γ-glycidoxypropyltrimethoxysilane, γ-glycidoxypropylmethyldiethoxysilane, β-(3,4-epoxycyclohexyl)ethyltrimethoxysilane, N-phenyl-γ-aminopropyltrimethoxysilane, hexamethyldisilazane, γ-mercaptopropyltrimethoxysilane, γ-aminopropyltriethoxysilane, etc.

As the composite filler of inorganic filler and organic filler, there can be mentioned, for example, a filler in which an inorganic filler is dispersed in an organic filler, and a filler obtained by coating an inorganic filler with an organic filler consisting of a polymer of a polymerizable monomer.

Of these, preferred is an irregular shaped silica (e.g. quartz) surface-treated with a silane coupling agent, because good operability (e.g. higher removability of excess paste) is obtained. A combination use of surface-treated irregular shaped silica and fumed silica is preferred more. The combination use of surface-treated irregular shaped silica and fumed silica can improve the compatibility between the component (A) polymerizable monomer and the surface-treated silica, whereby higher operability can be obtained.

The above-mentioned fillers may be used singly or in admixture of plural kinds. The use amount of the filler is preferably 60 to 900 parts by mass, more preferably 100 to 400 parts by mass relative to 100 parts by mass of the total of the components (A), (B) and (C), from the standpoint of allowing the cured material of the present adhesive to have sufficient strength.

To the adhesive of the present invention may be further added a polymerization inhibitor as other component. A known polymerization inhibitor may be used with no restriction. The use amount of the polymerization inhibitor in the adhesive is 0.001 to 10 mass %, preferably 0.005 to 5 mass %. With a use amount of the polymerization inhibitor in the adhesive, of more than 10 mass %, the curing of the adhesive is hindered, which is not preferred.

To the adhesive for orthodontic attachments, of the present invention may be added an organic thickening agent, for example, a high molecular compound such as polyvinylpyrrolidone, carboxymethyl cellulose, polyvinyl alcohol or the like, in such an amount that there is no reduction in the properties of the present adhesive. Further, there may be selectively used, as necessary, various additives such as ultraviolet absorber, stain, anti-static agent, pigment, perfume and the like.

The above-explained individual components of the system I), II) or III) are mixed into one mixture to obtain an adhesive of the present invention. The mixing may be conducted according to a known method for producing a known dental adhesive. In general, a polymerizable monomer, a fluorescent dye and a polymerization initiator are measured and mixed, in an inert light such as red light or the like. Then, a filler component and optional components (used as necessary) are measured; the above-obtained composition is measured and mixed; kneading is conducted; thereby, an adhesive of first pattern, of the present invention can be obtained.

### <Second pattern>

The second pattern of the present invention is an adhesive composition which contains a fluorescent dye as a component of the organic filler, and specifically is the composition of the following system IV).

### IV) A system using (A) a polymerizable monomer, (B) a polymerization initiator and (D) an organic filler containing at least (E) a polymer of a polymerizable monomer and (C) a fluorescent dye

The organic filler as the component (D) is solid particles having an average particle diameter of about 1 to 100 µm, which contain at least (E) a polymer of a polymerizable monomer and (C) a fluorescent dye.
In the system IV), the fluorescent dye (C) is confined in the organic filler (D), as a component thereof; therefore, the fluorescent dye (C) does not take part in the radical polymerization of the polymerizable monomer (A) and the polymerization initiator (B). Accordingly, there is no loss of the fluorescence of the fluorescent dye (C), caused by the polymerization reaction of the polymerizable monomer (A) and the polymerization initiator (B) and there is no need of paying attention to the combination of the polymerization initiator (B) and the fluorescent dye (C). However, since the production of the organic filler (D) includes a step of mixing a polymerizable monomer (which is a raw material of the component (E)), a polymerization initiator and the fluorescent dye (C) and polymerizing the polymerizable monomer, the combination of polymerization initiator used in the production of the organic filler (D) and the fluorescent dye (C) is selected carefully in order to occurs no loss of the fluorescence of the fluorescent dye (C) caused by polymerization, for example, employing the same composition as used in each of the systems I), II) and (III).

As to the polymerizable monomer constituting (E) the polymer of a polymerizable monomer, contained in the organic filler (D), there is no particular restriction; however, there can be mentioned monomers showing in the following i) to iv).

i) Monofunctional vinyl monomers Methacrylates such as methyl methacrylate, ethyl methacrylate, isopropyl methacrylate, hydroxyethyl methacrylate, tetrahydrofurfuryl methacrylate, glycidyl methacrylate and the like, and acrylates corresponding to theses methacrylates; acrylic acid, methacrylic acid, p-methacryloyloxybenzoic acid, N-2-hydroxy-3-methacryloyloxypropyl-N-phenylglycine, 4-methacryloyloxyethyltrimellitic acid, anhydride thereof, 6-methacryloyloxyhexamethylenemalonic acid, 10-methacryloyloxydecamethylenemalonic acid, 2-methacryloyloxyethyl dihydrogenphosphate, 10-methacryloyloxydecamethylene dihydrogenphosphate, 2-hydroxyethyl hydrogenphenylphosphonate, etc.

ii) Bifunctional vinyl monomers ii)-1 Aromatic compound types 2,2-Bis(methacryloyloxyphenyl)propane, 2,2-bis[4-(3-methacryloyloxy)-2-hydroxypropoxyphenyl]propane, 2,2-bis(4-methacryloyloxyphenyl)propane, 2,2-bis(4-methacryloyloxypolyethoxyphenyl)propane, 2,2-bis(4-methacryloyloxydiethoxyphenyl)propane, 2,2-bis(4-methacryloyloxytetraethoxyphenyl)propane, 2,2-bis(4-methacryloyloxypentaethoxyphenyl)propane, 2,2-bis(4-methacryloyloxydipropoxyphenyl)propane, 2(4-methacryloyloxydiethoxyphenyl)-2(4-methacryloyloxydiethoxyphenyl)propane, 2(4-methacryloyloxydiethoxyphenyl)-2(4-methacryloyloxyditriethoxyphenyl)propane, 2(4-methacryloyloxydipropoxyphenyl)-2-(4-methacryloyloxytriethoxyphenyl)propane, 2,2-bis(4-methacyloyloxypropoxyphenyl)propane, 2,2-bis(4-methacyloyloxyisopropoxyphenyl)propane, and acrylates corresponding to these methacrylates; diadducts obtained by addition of -OH group-containing vinyl monomer such as methacrylate (e.g. 2-hydroxyethyl methacrylate, 2-hydroxypropyl methacrylate or 3-chloro-2-hydroxypropyl methacrylate) or acrylate corresponding to such a methacrylate and aromatic group-containing diisocyanate compound such as diisocyanatomethylbenzene or 4,4'-diphenylmethanediisocyanate; etc.

ii)-2 Aliphatic compound types Ethylene glycol dimethacrylate, diethylene glycol dimethacrylate, triethylene glycol dimethacrylate, butylene glycol dimethacrylate, neopentyl glycol dimethacrylate, propylene glycol dimethacrylate, 1,3-butanediol dimethacrylate, 1,4-butanediol dimethacrylate, 1,6-hexanediol dimethacrylate, and acrylates corresponding to these methacrylates; diadducts obtained by addition of -OH group-containing vinyl monomer (e.g. 2-hydroxyethyl methacrylate, 2-hydroxypropyl methacrylate or 3-chloro-2-hydroxypropyl methacrylate) and diisocyanate compound (e.g. hexamethylene diisocyanate, trimethylhexamethylene diisocyanate, diisocyanatomethylcyclohexane, isophorone diisocyanate, or methylenebis(4-cyclohexyl isocyanate)); acrylic acid anhydride, methacrylic acid anhydride, 1,2-bis(3-methacyloyloxy-2-hydroxypropxy)ethyl, di(2-methacryloyloxypropyl) phosphate, etc.

iii) Trifunctional vinyl monomers Methacrylates such as trimethylolpropane trimethacrylate, trimethylolethane trimethacrylate, pentaerythritol trimethacrylate, trimethylolmethane trimethacrylate and the like, acrylates corresponding to these methacrylates, etc.

iv) Tetrafunctional vinyl monomers Diadducts obtained by addition of diisocyanate compound (e.g. pentaerythritol tetramethacrylate, pentaerythritol tetra-acrylate, diisocyanatomethylbenzene, diisocyanatomethylcyclohexane, isophorone diisocyanate, hexamethylene diisocyanate, trimethylhexamethylene diisocyanate, methylenebis(4-cyclohexyl isocyanate), 4,4-diphenylmethane diisocyanate or tolylene-2,4-diisocyanate) and glycidol dimethacrylate, etc.

These polymerizable monomers may be used singly or in admixture of different kinds.

The polymer (E) of a polymerizable monomer, constituting the component (D) is preferably produced by polymerizing the polymerizable monomer using a polymerization initiator. The method for the polymerization includes photo-polymerization using a light energy such as ultraviolet light, visible light or the like, chemical polymerization by a chemical reaction of a peroxide and an accelerator, thermal polymerization by heating, etc. In each of the polymerization methods employed, the polymerization initiator shown below is appropriately selected and used. It is desired to select a catalyst system low in coloring, from the standpoint of maintaining the aesthetics of the cured material of the present adhesive.

As the photo-polymerization initiator, for example, there can be used the same photo-polymerization initiator as the component (B) of the system II) or III), that is, a combination of an α-diketone and an amine, or an initiator which generates a radical species through intramolecular cleavage. Incidentally, when there is used the same photo-polymerization initiator as the component (B) of the system II) or III), most of known fluorescent dyes can be used as the component (C) fluorescent dye. When other photo-polymerization initiator is used, there can be used, as the component (C) fluorescent dye, the same condensed polycyclic compounds as in the system I).

As the thermal polymerization initiator, there can be mentioned, for example, peroxides such as benzoyl peroxide, p-chlorobenzoyl peroxide, tert-butyl peroxy-2-ethylhexanoate, tert-butyl peroxydicarbonate, diisopropyl peroxydicarbonate and the like; azo compounds such as azobisisobutyronitrile and the like; boron compounds such as tributylboran, tributylboran partial oxide, sodium tetraphenylborate, sodium tetrakis(p-fluorophenyl)borate, triethanolamine salt of tetraphenylboric acid and the like; barbituric acids such as 5-butylbarbituric acid, 1-benzyl-5-phenylbarbituric acid and the like; sulfinic acid salts such as sodium benzenesulfinate, sodium p-toluenesulfinate and the like. Of these, azobisisobutyronitrile is preferred because the organic filler per se hardly undergoes coloring.

As the chemical polymerization initiator, there can be mentioned the same initiators as in the system I), II) or III).

These polymerization initiators may be used singly or in admixture of two or more kinds. The use amount of the polymerization initiator is determined appropriately; however, it is ordinarily 0.01 to 30 parts by weight, preferably 0.1 to 5 parts by weight relative to 100 parts by weight of the polymerizable monomer.

When there is used, as the polymerization initiator, a polymerization initiator other than photo-polymerization initiator, there can be used, as the component (C) fluorescent dye, most of known fluorescent dyes with no restriction. There can be mentioned, for example, acid dyes such as Phloxine B, Eosine Y and the like; condensed polycyclic compounds such as coumarin type dye, perylene type dye, anthraquinone type dye, thioindigo type dye, quinophthalone type dye and the like; and C. I. Pigment Red 4, C. I. Pigment Red 49, C. I. Pigment Orange 5, C. I. Solvent Red 73, C. I. Acid Yellow 73, C. I. Acid Yellow 3, C. I. Solvent Green 7, C. I. Solvent Orange 2, C. I. Acid Yellow 40, capsanthin, C. I. Natural Red 25, C. I. Direct Orange 26, and C. I. Direct Red 23. Of these, a coumarin type dye is preferred because many of coumarin type dyes have a peak top of luminescence in the visible light region of 400 to 800 nm and, with a small addition thereof, clinically effective fluorescence can be obtained easily. Particularly preferred is 2,3,5,7-tetrahydro-1,1,7,7-tetramethyl-10-(benzothiazoyl)-11-oxo-1H,5H,11H,-[1]benzopyrano[6,7,8-ij]quinolizine having the maximum absorption wavelength at 480 nm.

Besides, dyes showing fluorescence described in JP2003-277424A can be used with no restriction.

In the system IV), the component (C) is used as one component of the organic filler (D). The use amount of the component (C) differs depending upon the amount of the component (D) used in the adhesive for orthodontic attachments and cannot be determined in a simple rule; however, the use amount is determined so that the cured material of the present adhesive exhibits a fluorescence intensity higher than that of the cured material for reference. Ordinarily, the use amount of the fluorescent dye (C) is preferably 0.01 to 2.0 parts by mass, more preferably 0.02 to 1.0 part by mass relative to 100 parts by mass of the component (E) in the component (D), from the standpoint of fluorescence intensity. With a use amount of the component (C), of less than 0.01 part by mass, distinguishment of residual adhesive in debonding is difficult and the effect of the component (C) tends to be low. With a use amount of the component (C), of more than 2.0 parts by mass, the color of the adhesive tends to be largely different from the color of crown, which is not preferred from the standpoint of aesthetic aspect.

The component (D) may as necessary contain, besides the component (E) and the component (C), an inorganic filler (hereinafter, the inorganic filler-containing component (D) is referred to as "organic composite filler"). As the inorganic filler, a known inorganic filler can be used with no restriction, and there can be mentioned the same inorganic fillers as shown in the system I), II) or III). The surface of the inorganic filler may be made hydrophobic by a surface-treating agent such as silane coupling agent or the like.

The average particle diameter of the inorganic filler is preferably 0.005 to 100 µm, more preferably 0.01 to 50 µm. The use amount of the inorganic filler in the organic composite filler is preferably 10 to 95 parts by mass, more preferably 30 to 90 parts by mass in 100 parts by mass of the organic composite filler.

The organic composite filler may have any of a form in which an inorganic filler is dispersed in a mixture of (E) a polymer of a polymerizable monomer and (C) a fluorescent dye or a form in which an inorganic filler is coated with a mixture of the component (E) and the component (C).

The component (D) may contain, besides the above-mentioned component (E), the component (C) and the inorganic filler, additives such as thickening agent, anti-static agent, stain, pigment and the like.

The component (D) can be produced, for example, by the following method.
That is, the polymerizable monomer (which is a raw material of the component (E)), the polymerization initiator, the component (C) and optional additives used as necessary are mixed, after which the polymerizable monomer is polymerized. Thereby, a cured material containing the component (E), the component (C) and the optional additives is produced. Then, the cured material is crushed and made into particles having desired diameters. In the grinding, there can be used, for example, a vibration ball mill, a beads mill, a jet mill or the like. After the grinding, there may be conducted, as necessary, classification by sieve, air separator, water elutriation or the like. By conducting the classification step, there can be obtained (D) an organic filler having an intended average particle diameter and an intended particle size distribution. As to the average particle diameter of the component (D), there is no particular restriction; however, the average particle diameter is preferably 1 to 100 µm, more preferably 5 to 50 µm because such an average particle diameter tends to give a paste low in sticking.

When the component (D) is obtained as an organic composite filler, the polymerizable monomer (which is a raw material of the component (E)), the polymerization initiator, the component (C), the inorganic filler and optional additives used as necessary are mixed; the mixture is cured and crushed; thereby an organic composite filler can be obtained. The organic composite filler obtained by this method is an organic composite filler in which the inorganic filler is dispersed uniformly in the mixture of the component (E) and the component (C).

Meanwhile, an organic composite filler in which the surface of the inorganic filler is coated with a mixture of the component (E) and the component (C), can be obtained by the method described in JP2008-37952A.

The use amount of the component (D) in the present adhesive composition is preferably 5 to 500 parts by mass, more preferably 10 to 250 parts by mass relative to 100 parts by mass of the total of the later-described component (A) and the later-described component (B). With a use amount of the component (D), of less than 5 parts by mass, the fluorescence intensity of the cured material of adhesive is insufficient; with a use amount of more than 500 parts by mass, the cured material of adhesive may show a color different from the color of crown.

Also when an organic composite filler is used as the component (D), the use amount of the component (D) is in the above-mentioned range. Also, the preferred average particle diameter of the organic composite filler used as the component (D) is the same as the above-mentioned average particle diameter of the organic filler.

The component (A) used in the system IV) which is the second pattern of the present invention, is the same as the component (A) used in the system I), II) or III).

As the polymerization initiator (B), a known polymerization initiator can be used. There can be mentioned, for example, a combination of an α-diketone (e.g. camphorquinone) and an amine, used in the system II) (in the combination, a radical is generated through the transfer of hydrogen between two components); and a photo-polymerization initiator used in the system III), which generates a radical species through intramolecular cleavage. Besides, a known electron acceptor represented by a photo-acid-generating agent can also be used with no restriction. In particular, such an electron acceptor represented by a photo-acid-generating agent is preferable because it provides enhanced polymerization activity; on the other hand, many of such electron acceptors are high in electron acceptability as explained previously and, in the system II) of the first pattern, cause the deactivation of fluorescent dye and accordingly are not usable or need be used restrictively. In the present pattern, however, the electron acceptor represented by a photo-acid-generating agent can be used preferably with no such restriction.

As the preferred electron acceptor represented by a photo-acid-generating agent, there can be mentioned a s-triazine compound having a trihalomethyl group as a substituent, represented by the following general formula (3).

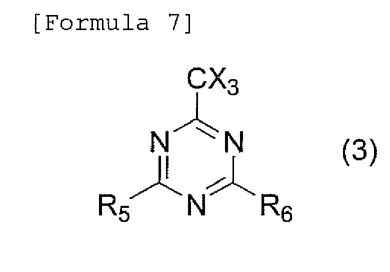

(In the formula, R₅ and R₆ are each an organic group having an unsaturated bond conjugable with triazine ring, an alkyl group whose hydrogen atom may be substituted with halogen atom, or an alkoxy group; and X is a halogen atom.)

In the above general formula (3), the halogen atom represented by X may be any of chlorine, bromine and iodine but is generally chlorine; therefore, the substituent (CX₃) bonded to the triazine ring is generally trichloromethyl group.

R₅ and R₆ may be any of an organic group having an unsaturated bond conjugable with triazine ring, an alkyl group and an alkoxy group. Preferably, at least either of R₅ and R₆ is an organic group having an unsaturated bond conjugable with triazine ring, from the standpoint of higher storage stability. On the other hand, at least either of R₅ and R₆ is preferably a halogen-substituted alkyl group, in order to obtain good polymerization activity. When both R₅ and R₆ are halogen-substituted alkyl group, polymerization activity, in particular, is good.

The organic group bonded via an unsaturated bond conjugable with triazine ring may be any known organic group but is preferably an organic group of preferably 2 to 30 carbon atoms, particularly 2 to 14 carbon atoms. As specific examples of such an organic group, there can be mentioned aryl groups of 6 to 14 carbon atoms, such as phenyl group, methoxyphenyl group, p-methylthiophenyl group, p-chlorophenyl group, 4-biphenylyl group, naphthyl group, 4-methoxy-1-naphthyl group and the like; and alkenyl groups of 2 to 14 carbon atoms, such as vinyl group, 2-phenylethenyl group, 2-(substituted phenyl)ethenyl group and the like. Incidentally, as the substituent group possessed by the substituted phenyl group, there can be mentioned alkyl groups of 1 to 6 carbon atoms, such as methyl group, ethyl group, propyl group and the like; alkoxy groups of 1 to 6 carbon atoms, such as methoxy group, ethoxy group, propoxy group and the like; alkylthio groups of 1 to 6 carbon atoms, such as methylthio group, ethylthio group, propylthio group and the like; phenyl group; halogen atoms; etc.

Also, in R¹ and R², the alkyl group and the alkoxy group may each have substituent group. Such an alkyl group is preferably one having 1 to 10 carbon atoms, and there can be mentioned, for example, unsubstituted alkyl groups such as methyl group, ethyl group, n-propyl group, isopropyl group, n-butyl group, n-hexyl group and the like; and halogen-substituted alkyl groups such as trichloromethyl group, tribromomethyl group, α,α,β-trichloroethyl group and the like. Further, an alkoxy group is preferably one having 1 to 10 carbon atoms, and there can be mentioned, for example, unsubstituted alkoxy groups such as methoxy group, ethoxy group, butoxy group and the like; and amino group-substituted alkoxy groups such as 2-{N,N-bis(2-hydroxyethyl)amino}ethoxy group, 2-{N-hydroxyethyl-N-ethylamino}ethoxy group, 2-{N-hydroxyethyl-N-methylamino}ethoxy group, 2-{N,N-diallylamino}ethoxy group and the like.

As specific examples of the trihalomethyl group-substituted s-triazine compound represented by the general formula (3), there can be mentioned 2,4,6-tris(trichloromethyl)-s-triazine, 2,4,6-tris(tribromomethyl)-s-triazine, 2-methyl-4,6-bis(trichloromethyl)-s-triazine, 2-methyl-4,6-bis(tribromomethyl)-s-triazine, 2-phenyl-4,6-bis(trichloromethyl)-s-triazine, 2-(p-methoxyphenyl)-4,6-bis(trichloromethyl)-s-triazine, 2-(p-methylthiophenyl)-4,6-bis(trichloromethyl)-s-triazine, 2-(p-chlorophenyl)-4,6-bis(trichloromethyl)-s-triazine, 2-(2,4-dichlorophenyl)-4,6-bis(trichloromethyl)-s-triazine, 2-(p-bromophenyl)-4,6-bis(trichloromethyl)-s-triazine, 2-(p-tolyl)-4,6-bis(trichloromethyl)-s-triazine, 2-n-propyl-4,6-bis(trichloromethyl)-s-triazine, 2- (α,α,β-trichloroethyl)-4,6-bis(trichloromethyl)-s-triazine, 2-styryl-4,6-bis(trichloromethyl)-s-triazine, 2-[2-(p-methoxyphenyl)ethenyl]-4,6-bis(trichloromethyl)-s-triazine, 2-[2-(o-methoxyphenyl)ethenyl]-4,6-bis(trichloromethyl)-s-triazine, 2-[2-(p-butoxyphenyl)ethenyl]-4,6-bis(trichloromethyl)-s-triazine, 2-[2-(3,4-dimethoxyphenyl)ethenyl]-4,6-bis(trichloromethyl)-s-triazine, 2-[2-(3,4,5-trimethoxyphenyl)ethenyl]-4,6-bis(trichloromethyl)-s-triazine, 2-(1-naphthyl-4,6-bis(trichloromethyl)-s-triazine, 2-(4-biphenylyl)-4,6-bis(trichloromethyl)-s-triazine, 2-[2-{N,N-bis(2-hydroxyethyl)amino}ethoxy]-4,6-bis(trichloromethyl)-s-triazine, 2-[2-{N-hydroxyethyl-N-ethylamino}ethoxy]-4,6-bis(trichloromethyl)-s-triazine, 2-[2-{N-hydroxyethyl-N-methylamino}ethoxy]-4,6-bis(trichloromethyl)-s-triazine, and 2-[2-{N,N-diallylamino}ethoxy]-4,6-bis(trichloromethyl)-s-triazine.

Of the above-shown triazine compounds, particularly preferred is 2,4,6-tris(trichloromethyl)-s-triazine from the standpoint of polymerization activity; and particularly preferred from the standpoint of storage stability are 2-phenyl-4,6-bis(trichloromethyl)-s-triazine, 2-(p-chlorophenyl)-4,6-bis(trichloromethyl)-s-triazine and 2-(4-biphenylyl)-4,6-bis(trichloromethyl)-s-triazine. These triazine compounds may be used singly or in admixture of two or more kinds.

Meanwhile, as the preferred photo-acid-generating agent, there can also be used an aryl iodonium salt (which is a strong electron acceptor) having a saturated calomel electrode-reduced potential of ordinarily -0.6 V or higher, and a known such compound can be used with no restriction. As specific examples of the aryl iodonium salt preferably usable in the present invention, there can be mentioned salts of cation (e.g. diphenyl iodonium, bis(p-chlorophenyl) iodonium, ditolyl iodonium, bis(p-methoxyphenyl) iodonium, bis(p-tert-butylphenyl) iodonium, p-isopropylphenyl-p-methylphenyl iodonium, bis(m-nitrophenyl) iodonium, p-tert-butylphenyl phenyl iodonium, p-methoxyphenyl phenyl iodonium, p-octyloxyphenyl phenyl iodonium or p-phenoxyphenyl phenyl iodonium) and anion (e.g. chloride, bromide, benzenesulfonate, p-toluenesulfonate, trifluoromethanesulfonate, tetrafluoroborate, tetrakis(pentafluorophenyl)borate, tetrakis(pentafluorophenyl)gallate, hexafluorophosphate, hexafluoroarsenate, or hexafluoroantimonate).

In these aryl iodonium salts, from the standpoint of the solubility to radical polymerizable monomer, salts of p-toluenesulfonate, trifluoromethanesulfonate, tetrafluoroborate, tetrakis(pentafluorophenyl)borate, tetrakis(pentafluorophenyl)gallate, hexafluorophosphate, hexafluoroarsenate and hexafluoroantimonate are preferred; and from the standpoint of storage stability, salts of tetrakis(pentafluorophenyl)borate, tetrakis(pentafluorophenyl)gallate and hexafluoroantimonate are particularly preferred. These aryl iodonium salts may be used singly or in admixture of two or more kinds.

Besides, there can also be preferably used, for example, 2,3-dichloro-5,6-dicyano-1,4-benzoquinone (which is a strong electron acceptor) having a saturated calomel electrode-reduced potential of ordinarily -0.6 V or higher.

As the component (B), there can also be used a thermal polymerization initiator or a chemical polymerization initiator.

As to the use amount of the component (B), there is no particular restriction as long as the amount is effective for the curing of the present adhesive, and the amount is determined appropriately. The use amount is preferably 0.01 to 10 mass %, more preferably 0.1 to 5 mass % in 100 mass % of the total of the component (A) and the component (B). With a use amount of the component (B), of less than 0.01 mass %, insufficient polymerization tends to take place. On the other hand, with a use amount of the component (B), of more than 10 mass %, the strength of cured material tends to be low, which is not preferred.
In the system IV), a known filler may be used, besides the organic filler or organic composite filler used as the component (D). As the filler other than the component (D), there can be mentioned the same inorganic filler, organic filler and composite filler as in the system I), II) or III). The filler other than the component (D) may be used in one kind or in combination of plural kinds. The use amount thereof is preferably 60 to 900 parts by mass, more preferably 100 to 400 parts by mass in terms of the total of the organic filler or organic composite filler used as the component (D) and the filler other than the component (D), relative to 100 parts by mass of the total of the components (A) and (B), from the standpoint of allowing the cured material of the present adhesive to have sufficient strength.

In the system IV) as well, there can be used, besides the components mentioned above, optional components, for example, additives such as polymerization inhibitor, organic thickening agent, ultraviolet absorber, anti-static agent, stain, pigment, perfume and the like.

The above-explained individual components of the system IV) are mixed into one mixture to obtain an adhesive. The method for the mixing may be a known method for production of dental adhesive. In general, at first, a polymerizable monomer and a polymerization initiator are measured and mixed, in an inert light such as red light or the like. Then, a filler component and optional components (used as necessary) are measured; the above-obtained composition is measured and mixed; kneading is conducted; thereby, an adhesive of second pattern, of the present invention can be obtained.
In the adhesive for orthodontic attachments, of the present invention, when the cured material thereof is removed from teeth surfaces, it is necessary to apply a light containing a wavelength capable of exciting the fluorescent dye contained in the cured material, using a light irradiator, in order to allow the fluorescent dye to generate fluorescence. As the light irradiator employed for such a purpose, there can be used a known light irradiator such as halogen light, LED light, xenon light or the like, with no restriction.

The adhesive for orthodontic attachments, of the present invention may be used in combination with a phosphoric acid etching agent and/or a primer, a prophy paste, etc.

### Examples

The present invention is described in more detail below by way of Examples. The present invention is in no way restricted to the following Examples. Incidentally, the abbreviations used in the Examples are as follows.

### Abbreviations

### [Polymerizable monomers]

Bis-GMA: 2,2'-bis(4-(2-hydroxy-3-methacryloxypropoxy)phenyl)propane
3G: triethylene glycol dimethacrylate
D-2,6E: 2,2-bis[(4-methacryloyloxypolyethoxyphenyl)propane] (a mixture in which the average repetition of ethoxy moiety is about 2.6)
PM: a mixture of 2-methacryloyloxyethyl dihydrogenphosphate and bis(2-methacryloyloxyethyl) hydrogenphosphate HEMA: 2-hydroxyethyl methacrylate

### [Polymerization initiators]

CQ: camphorquinone
DMBE: ethyl dimethylaminobenzoate
MDEOA: N-methyldiethanolamine
TPO: 2,4,6-trimethylbenzoyl diphenyl phosphine oxide
TCT: 2,4,6-tris(trichloromethyl)-s-triazine (saturated calomel electrode-reduced potential: -0.78 V)
DPIP: diphenyl iodonium hexafluorophosphate (saturated calomel electrode-reduced potential: -0.26 V)
AIBN: azobisisobutyronitrile

### [Fluorescent dyes and other dyes]

CM 1: 2,3,6,7-tetrahydro-1,1,7,7-tetramethyl-10-(benzothiazoyl)-11-oxo-1H,5H,11H,-[1]benzopyrano[6,7,8-ij]quinolizine

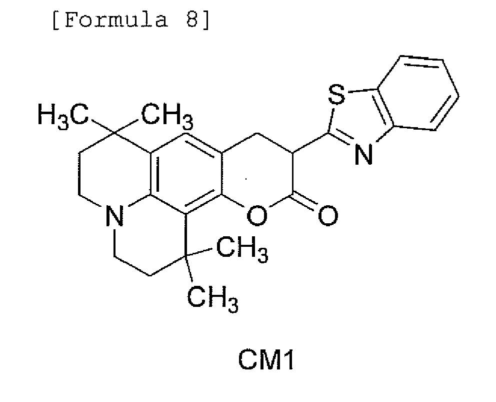

CM 2: 3,3'-carbonylbis(7-diethylamino)coumarin

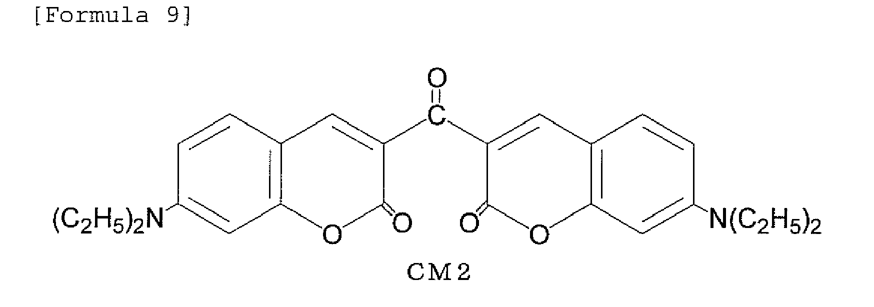

EY: Eosine Y
FS: fluoresceine
EYB: erythrosine yellow blend (a mixture of erythrosine (90) and Eosine Y (10))

### [Organic fillers]

YF 1: An organic filler having a formulation shown in Table 1 was produced according to the following Production Example 1.

### Production Example 1

Radical-polymerizable monomers (Bis-GMA/3G = 60/40) were measured. Thereinto were added CM 1 and AIBN in the proportions shown in Table 1, followed by stirring, to obtain a solution. The solution was heated at 95°C for 1 hour under an applied nitrogen pressure to give rise to polymerization and curing. The obtained cured material was crushed using a vibration ball mill, to obtain an organic filler YF 1 having an average particle diameter of 30 µm. The formulation of the organic filler YF 1, used in Production Example 1 is shown in Table 1.
YF 2 and YF 4: Organic composite fillers having formulations shown in Table 1 were produced according to the following Production Examples 2 and 4.

### Production Examples 2 and 4

Radical-polymerizable monomers (Bis-GMA/3G = 60/40) were measured. Thereinto were added CM 1 or FS and AIBN in the proportions shown in Table 1, followed by stirring, to obtain a solution. To 100 parts by mass of this matrix was added 300 parts by mass of a surface-treated silica-zirconia filler, followed by mixing; the mixture was made into a paste in a mortar. The paste was heated at 95°C for 1 hour under an applied nitrogen pressure to give rise to polymerization and curing. The obtained cured material was ground using a vibration ball mill, to obtain an organic composite filler YF 2 or YF 4, each having an average particle diameter of 30 µm. The formulations of the organic composite fillers, used in Production Examples 2 and 4 are shown in Table 1.
YF 3: An organic composite filler having a formulation shown in Table 1 was produced according to the following Production Example 3.

### Production Example 3

100 g of a silica-zirconia filler was placed in 200 g of water. Using a circulation type grinder (a SC mill), a liquid dispersion of inorganic powder was obtained.

Then, to 80 g of water were added 4 g (0.016 mol) of γ-methacryloyloxypropyltrimethoxysilane and 0.003 g of acetic acid, followed by stirring for 1 hour and 30 minutes, to obtain a uniform solution having a pH of 4. This solution was added to the above-prepared liquid dispersion, followed by uniform mixing. Then, the uniform dispersion was fed, with gentle mixing, onto the disc (which was rotating at a high speed) of a spray drier (Spray Drier TSR-2W, a product of Sakamoto Giken K.K.) to spray-dry the dispersion by the centrifugal force of the disc. In this case, the rpm of the disc was 10,000 and the temperature of ambient air was 200°C. Then, the spray-dried inorganic powder was vacuum-dried at 60°C for 18 hours to obtain 71 g of inorganic aggregated particles. The inorganic aggregated particles had an average particle diameter of 40.0 µm.

Then, a matrix was prepared by measuring radical-polymerizable monomers (Bis-GMA/3G = 60/40), adding thereinto CM 1 and AIBN in the proportions shown in Table 1, and conducting stirring for dissolution. 1.785 g of the matrix was dropped, under a vacuum of 5 hectopascal, into 10.0 g of the above-produced inorganic aggregated particles which were being stirred vigorously. This dropping was carried out as follows. That is, one-third of the polymerizable monomers were dropped in 10 minutes under a vacuum of 5 hectopascal; the dropping was suspended and the pressure was returned to normal in 10 to 20 seconds; then, the pressure was reduced to 5 hectopascal and the remainder of the polymerizable monomers was dropped; the pressure was returned to normal; thus, the operation of dropping under vacuum and the pressure returning to normal was repeated twice in a total time of about 30 minutes. After the completion of the dropping, the inside of the reactor was purged with nitrogen, followed by stirring for 60 minutes. Then, the inorganic aggregated particles which the polymerizable monomers had penetrated, were heated at 100°C and stirred for 1 hour to polymerize and cure the matrix to obtain 8.5 g of an organic composite filler.

The organic composite filler had an average particle diameter of 36.2 µm.

### [Other components: inorganic fillers]

Quartz: a quartz having an average particle diameter of 4 µm, which was surface-treated with γ-methacryloyloxypropyltrimethoxysilane Fumed silica: an indefinite shaped fumed silica having an average primary particle diameter of 15 nm, which was surface-treated with methyltrichlorosilane Surface-treated silica-zirconia filler (used in Production Example 2): a spherical silica-zirconia (produced by a sol-gel method) having an average particle diameter of 0.2 µm, which was surface-treated with γ-methacryloyloxypropyltrimethoxysilane Silica-zirconia filler (used in Production Example 3): a spherical silica-zirconia (produced by a sol-gel method) having an average particle diameter of 0.2 µm

(1) Comparison of the maximum fluorescence intensity of cured material of adhesive for orthodontic attachments, with the maximum fluorescence intensity of cured material of curing composition for reference

### [Before durability test]

An adhesive for orthodontic attachments was filled in a cylindrical polytetrafluoroethylene (PTFE) mold of 1.0 mm in thickness and 20 mm in diameter and was irradiated with a light from the both sides for 60 seconds, using a halogen dental curing light unit (Power Light, a product of Tokuyama Dental) to cure completely to produce a sample having a thickness of 1.0 ± 0.1 mm. Immediately, the sample was irradiated with a light of 480 nm wavelength using a fluorescence spectrophotometer (Model FP-770, a product of Nihon Bunkosha) to excite the fluorescent component in the sample, and the fluorescence spectrum generated in a 480 to 800 nm region was measured and the maximum peak height (the maximum fluorescence intensity) thereof was measured. The exciting light was irradiated from the thickness direction of the cured material and the fluorescence spectrum of the fluorescence emitted from the cured material was measured.

Meanwhile, a sample (a cured material) having a thickness of 1.0 ± 0.1 mm was produced in the same manner using a curing composition for reference consisting of (a) 2,2'-bis(4-(2-hydroxy-3-methacryloxypropoxy)phenyl)propane, (b) triethylene glycol dimethacrylate, (c) camphorquinone, (d) ethyl dimethylaminobenzoate and (e) Eosine Y, in which the total of the components (a) to (d) was 100 parts by mass ((a) was 59.9 mass %, (b) was 39.9 mass %, (c) was 0.1 mass %, and (d) was 0.1 mass %)) and the component (e) was 0.001 part by mass. The maximum peak height of the fluorescence of the sample was measured.

The two maximum peak heights of the fluorescence emitted from the sample of the adhesive for orthodontic attachments and the fluorescence emitted from the sample of the curing composition for reference were compared, and there was calculated the relative fluorescence intensity (%) of the peak height of the sample of the adhesive for orthodontic attachments to the peak height of the sample of the curing composition for reference.

### [After durability test]

A test piece (which was a cured material of an adhesive for orthodontic attachments), produced in the same manner as in "Before durability test" was placed in a thermal impact tester and subjected to 3,000 times of an operation of immersing in a 4 °C water tank for 1 minute, transferring into a 60 °C water tank and immersing therein for 1 minute, and returning to the 4 °C water tank.

Then, the resulting test piece was measured for the maximum peak height of the fluorescence emitted therefrom, in the same manner as in "Before durability test", and there was calculated the relative fluorescence intensity (%) of the peak height of the sample of the adhesive for orthodontic attachments to the peak height of the sample of the curing composition for reference.

(2) Visual confirmation of cured material of adhesive for orthodontic attachments, by fluorescence emitted therefrom
An adhesive for orthodontic attachments was heaped on an extracted human molar tooth in a thickness of about 0.3 mm and then polymerized and cured. Immediately, this cured material of adhesive on the tooth was irradiated with a light using a dental irradiator (Power Light, a product of Tokuyama Dental, wavelength of irradiated light: 380 to 530 nm) and the fluorescence emitted from the cured material was observed. The emitted fluorescence was evaluated based on the following standard.
X: The cured material cannot be easily distinguished from the teeth when seen through an orange-colored shading plate attached to a dental curing light unit.
○: The fluorescence cannot be confirmed visually, but the cured material can be easily distinguished from the teeth by the fluorescence emitted from the cured material when seen through an orange-colored shading plate attached to a dental curing light unit.
○○: The cured material can be easily distinguished from the teeth visually with no use of an orange-colored shading plate attached to a dental curing light unit.

### Examples 1 to 16 and Comparative Examples 1 to 7

Polymerizable monomers, a fluorescent dye and polymerization initiators, shown in Table 2, Table 3 and Table 5 were stirred in a dark place until they became a uniform composition. Into 100 parts by mass of the composition were mixed 136 parts by mass of quartz and 34 parts by mass of fumed silica. The mixture was degassed under vacuum to obtain individual adhesives for orthodontic attachments. Each adhesive was measured for the maximum fluorescence intensities of its cured material, before durability test and after durability test, and the data obtained were compared with the maximum fluorescence intensities of the cured material of curing composition for reference. Also, each cured material of adhesive was visually confirmed for the fluorescence. The results are shown in Table 6 and Table 7.

### Examples 17 to 22

Polymerizable monomers and polymerization initiators, shown in Table 4 were stirred in a dark place until they became a uniform composition. Into 100 parts by mass of the composition were mixed 51 parts by mass of an organic filler, 85 parts by mass of quartz and 34 parts by mass of fumed silica. The mixture was degassed under vacuum to obtain individual adhesives for orthodontic attachments. Each adhesive was measured for the maximum fluorescence intensities of its cured material, before durability test and after durability test, and the data obtained were compared with the maximum fluorescence intensities of the cured material of curing composition for reference. Also, each cured material of adhesive was visually confirmed for the fluorescence. The results are shown in Table 6.

### [Table 1]

**Table 1**

| Production Example | Organic filler or organic composite filler | Component (D) formulation/mass parts | | | | | |
|---|---|---|---|---|---|---|---|
| | | Matrix components | | | | | Silica-zirconia inorganic filler (mass parts relative to 100 mass parts of matrix components) |
| | | Component (E) | | Component (C) | | Polymerization initiator | |
| | | Bis-GMA | 3G | FS | CM 1 | AIBN | |
| 1 | YF 1 | 59.7 | 39.8 | | 0.024 | 0.5 | |
| 2 | YF 2 | 59.7 | 39.8 | | 0.096 | 0.5 | 300 |
| 3 | YF 3 | 59.7 | 39.8 | | 0.158 | 0.5 | 560.2 |
| 4 | YF 4 | 59.7 | 39.8 | 1.68 | | 0.5 | 300 |

### [Table 2]

**Table 2**

| Example | Formulation/mass parts | | | | | | | | | | | | | | Filler components [mass parts relative to 100 mass parts of components (A), (B) and (C)] |
|---|---|---|---|---|---|---|---|---|---|---|---|---|---|---|---|
| | Component (A) | | | | | Component (B) | | | | | Component (C) | | | | |
| | PM | D-2.6E | Bis-GMA | 3G | HEMA | CQ | DMBE | TPO | TCT | MDEOA | EY | FS | CM 1 | CM 2 | |
| 1 | | 69.7 | | 29.8 | | 0.2 | 0.3 | | | | 0.022 | | | | Quartz (136) Fumed silica (34) |
| 2 | | 69.7 | | 29.8 | | 0.2 | 0.3 | | | | | 0.1 | | | |
| 3 | | 69.7 | | 29.8 | | 0.2 | 0.3 | | | | | | 0.011 | | |
| 4 | | 69.7 | | 29.8 | | 0.2 | 0.3 | | | | | | 0.0057 | | |
| 5 | | 69.7 | | 29.8 | | 0.2 | 0.3 | | | | | | | 0.011 | |
| 6 | | | 59.7 | 39.8 | | 0.2 | 0.3 | | | | | | 0.0057 | | |
| 7 | 7.9 | 61.2 | | 29.6 | | 0.2 | 0.3 | 0.8 | | | 0.022 | | | | |
| 8 | 7.9 | 61.2 | | 29.6 | | 0.2 | 0.3 | 0.8 | | | | | 0.011 | | |
| 9 | 7.9 | 61.2 | | 29.6 | | 0.2 | 0.3 | 0.8 | | | | | 0.0032 | | |
| 10 | 24.3 | | 29.2 | 19.5 | 24.2 | 1.0 | 1.0 | 0.8 | | | | | 0.0032 | | |
| 11 | 15 | 58 | | 27 | | 0.2 | 0.3 | 0.8 | | | | | 0.0032 | | |
| 12 | | 69.7 | | 29.8 | | | 0.3 | 0.8 | | | | | 0.011 | | |

### [Table 3]

**Table 3**

| Example | Formulation/mass parts | | | | | | | | | | | | | | Filler components [mass parts relative to 100 mass parts of components (A), (B) and (C)] |
|---|---|---|---|---|---|---|---|---|---|---|---|---|---|---|---|
| | Component (A) | | | | | Component (B) | | | | | Component (C) | | | | |
| | PM | D-2.6E | Bis-GMA | 3G | HEMA | CQ | DMBE | TPO | TCT | MDEOA | EY | FS | CM 1 | CM 2 | |
| 13 | | 69.4 | | 29.8 | | | | 0.8 | | | | | 0.011 | | Quartz (136) Fumed silica (34) |
| 14 | | 69.1 | | 29.6 | | 0.2 | 0.3 | 0.8 | | | | | 0.011 | | |
| 15 | | 69.4 | | 29.8 | | 0.2 | 0.3 | | 0.2 | 0.1 | | | 0.011 | | |
| 16 | | 69.4 | | 29.8 | | 0.2 | 0.3 | | 0.2 | 0.1 | | | 0.032 | | |

### [Table 4]

**Table 4**

| Example | Formulation/mass parts | | | | | | | | Filler components [mass parts relative to 100 parts of components (A) and (B)] | | | | |
|---|---|---|---|---|---|---|---|---|---|---|---|---|---|
| | Component (A) | | Component (B) | | | | | | Component (D) | | | | Inorganic filler components |
| | D-2.6E | 3G | CQ | DMBE | TPO | TCT | DPIP | MDEOA | YF 1 | YF 2 | YF 3 | YF 4 | |
| 17 | 69.4 | 29.8 | 0.2 | 0.3 | | 0.2 | | 0.1 | 51 | | | | Quartz (85) Fumed silica (34) |
| 18 | 69.1 | 29.6 | 0.2 | 0.3 | 0.8 | | | | | 51 | | | |
| 19 | 69.4 | 29.8 | 0.2 | 0.3 | | 0.2 | | 0.1 | | 51 | | | |
| 20 | 69.4 | 29.8 | 0.2 | 0.3 | | | 0.1 | | | 51 | | | |
| 21 | 69.4 | 29.8 | 0.2 | 0.3 | | 0.2 | | 0.1 | | | 51 | | |
| 22 | 69.4 | 29.8 | 0.2 | 0.3 | | 0.2 | | 0.1 | | | | 51 | |

### [Table 5]

**Table 5**

| Comp. Example | Formulation/mass parts | | | | | | | | | | Filler components [mass parts relative to 100 mass parts of components (A), (B) and (C)] |
|---|---|---|---|---|---|---|---|---|---|---|---|
| | Component (A) | | | Component (B) | | | | Component (C) | | | |
| | D-2.6E | Bis-GMA | 3G | CQ | DMBE | TPO | DPIP | CM 1 | EY | FS | |
| 1 | 69.7 | | 29.8 | 0.2 | 0.3 | | | | | | Quartz (136) Fumed silica (34) |
| 2 | 69.7 | | 29.8 | 0.2 | 0.3 | | | 0.0001 | | | |
| 3 | | 59.7 | 39.8 | 0.2 | 0.3 | | | 0.0001 | | | |
| 4 | | 59.3 | 39.6 | | 0.3 | 0.8 | | 0.0001 | | | |
| 5 | | 59.6 | 39.8 | 0.2 | 0.3 | | 0.1 | 0.0057 | | | |
| 6 | | 59.6 | 39.8 | 0.2 | 0.3 | | 0.1 | | 0.01* | | |
| 7 | | 59.6 | 39.8 | 0.2 | 0.3 | | 0.1 | | | 0.1 | |

| | | | | | | | | | | | |
|---|---|---|---|---|---|---|---|---|---|---|---|
| * Added as a mixture of erythrosine : EY = 9 : 1. | | | | | | | | | | | |

### [Table 6]

**Table 6**

| | | Fluorescence intensity | | | Visual confirmation of fluorescence on human tooth |
|---|---|---|---|---|---|
| | | Maximum fluorescence wavelength (nm) | Relative value to reference (%) | | |
| | | | Before durability test | After durability test | |
| Example | 1 | 509.5 | 120 | 110 | ○ |
| | 2 | 520.0 | 115 | 100 | ○ |
| | 3 | 507.0 | 515 | 500 | ○○ |
| | 4 | 494.5 | 388 | 372 | ○○ |
| | 5 | 528.5 | 350 | 345 | ○○ |
| | 6 | 500.5 | 410 | 398 | ○○ |
| | 7 | 509.5 | 128 | 32 | ○ |
| | 8 | 556.0 | 654 | 623 | ○○ |
| | 9 | 537.0 | 336 | 321 | ○○ |
| | 10 | 532.5 | 333 | 315 | ○○ |
| | 11 | 547.0 | 259 | 231 | ○ |
| | 12 | 506.5 | 410 | 400 | ○○ |
| | 13 | 506.5 | 413 | 402 | ○○ |
| | 14 | 516.5 | 549 | 539 | ○○ |
| | 15 | 523.5 | 188 | 178 | ○ |
| | 16 | 525.5 | 301 | 300 | ○○ |
| | 17 | 523.5 | 498 | 485 | ○○ |
| | 18 | 522.5 | 534 | 521 | ○○ |
| | 19 | 523.5 | 512 | 503 | ○○ |
| | 20 | 524.5 | 423 | 412 | ○○ |
| | 21 | 523.5 | 520 | 509 | ○○ |
| | 22 | 520.5 | 134 | 119 | ○ |

### [Table 7]

**Table 7**

| | | Fluorescence intensity | | | Visual confirmation of fluorescence on human tooth |
|---|---|---|---|---|---|
| | | Maximum fluorescence wavelength (nm) | Relative value to reference (%) | | |
| | | | Before durability test | After durability test | |
| | 1 | No peak detection | | | X |
| Comp. Example | 2 | 506.0 | 6.8 | 6.5 | X |
| | 3 | 500.5 | 7.2 | 6.9 | X |
| | 4 | 500.0 | 3.1 | 2.0 | X |
| | 5 | 501.0 | 9.2 | 8.8 | X |
| | 6 | 514.5 | 8.0 | No peak detection | X |
| | 7 | 516.0 | 7.0 | No peak detection | X |

## Claims

1. An adhesive for orthodontic attachments, comprising the following components (A) to (C)
(A) a polymerizable monomer,
(B) a polymerization initiator, and
(C) a fluorescent dye,
which exhibits a fluorescence spectrum having a peak at 400 to 800 nm when it is cured and the cured material right after curing, having a thickness of 1.0 ± 0.1 mm is measured for the fluorescence emitted therefrom when exposed to a light of 480 nm wavelength and wherein the maximum fluorescence intensity of the fluorescence spectrum is higher than the maximum fluorescence intensity of the cured material of the following curing composition for reference, measured under the same condition:
[Curing composition for reference]
A curing composition comprising
(a) 2,2'-bis(4-(2-hydroxy-3-methacryloxypropoxy)phenyl)propane,
(b) triethylene glycol dimethacrylate,
(c) camphorquinone,
(d) ethyl dimethylaminobenzoate, and
(e) Eosine Y
wherein the component (e) is contained in an amount of 0.001 part by mass relative to 100 parts by mass of the components (a) to (d) consisting of 59.9 mass % of (a), 39.9 mass % of (b), 0.1 mass % of (c) and 0.1 mass % of (d).

2. The adhesive for orthodontic attachments according to Claim 1, wherein the polymerization initiator (B) is a compound which generates a radical through the hydrogen transfer between two components and which contains essentially no electron acceptor having a saturated calomel electrode-reduced potential of -0.6 V or higher.

3. The adhesive for orthodontic attachments according to Claim 1, wherein the polymerization initiator (B) is a compound which generates a radical species through intramolecular cleavage.

4. The adhesive for orthodontic attachments according to Claim 2 or 3, wherein the polymerizable monomer (A) contains, at least as part thereof, an acidic group-containing polymerizable monomer and the fluorescent dye (C) is a coumarin type dye.

5. The adhesive for orthodontic attachments according to Claim 4, wherein the fluorescent dye (C) is 2,3,6,7-tetrahydro-1,1,7,7-tetramethyl-10-(benzothiazoyl)-11-oxo-1H, 5H, 11H,-[1]benzopyrano[6,7,8-ij]quinolizine.

6. An adhesive for orthodontic attachments, comprising the following components (A), (B) and (D)
(A) a polymerizable monomer,
(B) a polymerization initiator, and
(D) an organic filler containing at least (E) a polymer of a polymerizable monomer and (C) a fluorescent dye, or an organic composite filler containing at least (E) a polymer of a polymerizable monomer, (C) a fluorescent dye and an inorganic filler,
which exhibits a fluorescence spectrum having a peak at 400 to 800 nm when it is cured and the cured material right after curing, having a thickness of 1.0 ± 0.1 mm is measured for the fluorescence emitted therefrom when exposed to a light of 480 nm wavelength and wherein the maximum fluorescence intensity of the fluorescence spectrum is higher than the maximum fluorescence intensity of the cured material of the following curing composition for reference, measured under the same condition:
[Curing composition for reference]
A curing composition comprising
(a) 2,2'-bis(4-(2-hydroxy-3-methacryloxypropoxy)phenyl)propane,
(b) triethylene glycol dimethacrylate,
(c) camphorquinone,
(d) ethyl dimethylaminobenzoate, and
(e) Eosine Y
wherein the component (e) is contained in an amount of 0.001 part by mass relative to 100 parts by mass of the components (a) to (d) consisting of 59.9 mass % of (a), 39.9 mass % of (b), 0.1 mass % of (c) and 0.1 mass % of (d).

7. The adhesive for orthodontic attachments according to Claim 6, wherein the polymerization initiator (B) is a s-triazine compound having a trihalomethyl group as a substituent and/or an aryliodonium salt, or is a compound which generates a radical species through intramolecular cleavage.

8. The adhesive for orthodontic attachments according to Claim 6, wherein the fluorescent dye (C) is 2,3,6,7-tetrahydro-1,1,7,7-tetramethyl-10-(benzothiazoyl)-11-oxo-1H, 5H, 11H,-[1]benzopyrano[6,7,8-ij]quinolizine.
